# EUROPEAN PATENT APPLICATION

(11) **EP 1 650 560 A1**
(43) Date of publication of application: **26.04.2006**
(21) Application number: 04727747.0
(22) Date of filing: 15.04.2004
(51) Int. Cl.: G01N 27/327, G01N 33/50

(54) **BIOSENSOR AND PRODUCTION METHOD THEREFOR**

(30) Priority: 25.07.2003 JP 2003280261; 20.01.2004 JP 2004012076; 04.03.2004 JP 2004060834
(71) Applicant: National Institute of Advanced Industrial Science and Technology, Tokyo 100-8921 (JP)
(72) Inventor: KARUBE, Isao, Nat. Inst. of Adv. Ind. Sci. & Tech., Tsukuba-shi, Ibaraki (JP); GOTO, Masao, Nat. Inst. of Adv. Ind. Sci. & Tech., Tsukuba-shi, Ibaraki (JP); NAKAMURA, Hideaki, Nat. Inst. of Adv. Sci & Tech., Tsukuba-shi, Ibaraki (JP)
(74) Representative: Setna, Rohan P.
(86) International application number: PCT/JP2004/005436
(87) International publication number: WO 2005/010519

(57) **Abstract**

A downsized biosensor in which an electrode is formed on one sheet of electrically-insulated substrate, and a sheet of flat substrate is worked three-dimensionally so as to dispose the electrode on the inner side of the substrate to provide a two-dimensional or three-dimensional electrode disposition, whereby a sample introduced by capillary phenomenon can be measured quantitatively in a small space. A production method of a biosensor comprising the steps of bending a plate member so as to position an electrode formed on the surface of the electrically-insulated plane member on the inner side, and disposing the electrode in a space surrounded by a substrate and a cover to thereby form the substrate and the cover from one sheet of plate member.

## Description

### Background of the Invention

### Field of the Invention

The present invention relates to a biosensor. More precisely, the invention relates to a biosensor usable in blood sugar meters for household self-diagnosis, urine sugar meters, glycosylation hemoglobin meters, lactate meters, cholesterol meters, urate meters, protein meters, single nucleotide polymorphisms sensors, DNA chips for genetic diagnosis, as well as in alcoholic meters, glutamate meters, pyruvate meters and pH meters, in which the component concentration of various fluids is electrochemically determined by the use of enzyme or the like. The invention also relates to a method for producing a biosensor, comprising a folding and bending step. More precisely, the invention relates to the production method that preferably comprises a folding and bending step and a cutting step, or a folding and bending step and a fixation step.

### Description of the Related Art

For disposable sensors (Patent Document 1, JP-A-47-500, Patent Document 3: JP-A-52-142584), heretofore known is a sensor mechanism (Fig. 1, Patent Document 7: JP-A-1-291153), which has a three-dimensional structure for ensuring quantitativeness and may automatically introduce a sample fluid into the inside of the sensor by utilizing capillarity (Patent Document 5: JP-A-56-79242, Patent Document 6: JP-T 61-502419). The sensor having the constitution of the type is constructed by disposing a spacer 2 and further a cover 3 on an electrically-insulating substrate 1. On the substrate, formed is an electrode pattern 4; and on the cover, formed is an air hole 5 necessary for air removal for capillarity. For introducing a predetermined amount of a sample fluid 6 to the detection part by capillarity via the substrate, the spacer and the cover, formed are a sample inlet port 7 and a sample transfer path 8 equipped with an air hole 5 on one side thereof. These constitutive parts must be previously blanked out, each having their own predetermined shapes. For accurate assembly of these parts in three-dimensional construction working, their positions must be predetermined. With the increase in the number of the constitutive parts, therefore, the three-dimensional construction process for producing the intended sensor mechanism is further complicated. In addition, when the sensors require a molecule identification element, application of a reagent such as mediator thereto (Patent Document 2: JP-A-48-37187, Patent Document 4: JP-A-54-50396), and formation therein of a membrane for evading any influence of an interfering substance on it (Patent Document 8: JP-A-3-202764), then the process of producing them shall be more complicated.

Documents relating to the biosensor are listed below, along with the keywords therein:
Patent Document 1: JP-A-47-500 (Miles)
disposable sensor, dry reagent
Patent Document 2: JP-A-48-37187 (Roche)
enzyme, mediator
Patent Document 3: JP-A-52-142584 (Kodak)
disposable sensor
Patent Document 4: JP-A-54-50396 (Matsushita)
enzyme, mediator
Patent Document 5: JP-A-56-79242 (United)
capillary
Patent Document 6: JP-T 61-502419 (Unilever)
capillary
Patent Document 7: JP-A-1-291153 (Matsushita)
basic structure, sample inlet port, multi-detection sensor
Patent Document 8: JP-A-3-202764 (Matsushita)
basic structure, blood cell filtration membrane
Patent Document 9: JP-A-5-199898 (Toshiba)
DNA chip
Patent Document 10: JP-A-9-222414 (NOK)
pH sensor
Patent Document 11: JP-A-2001-204494
glycosylation hemoglobin sensor
Patent Document 12: WO01/33216 A1 (Serasense)
facing electrode, sample inlet port
Patent Document 13: US 4225410 (Technicon)
array electrode
Patent Document 14: US 5653864 (NOK)
protein sensor
Patent Document 15: US 6071391 (NOK)
sample inlet port, facing electrode
Non-Patent Document 1: A. Ahmadian et al., Biotechniques, 32, 748 (2002)
SNPs

### Summary of the Invention

The above-mentioned conventional sensors require many steps and many materials for their production, and must have complicated structures. As a result, the production line for them requires a great deal of capital investment, the producibility of the products is not good, and the production costs are high. Naturally, the environmental load in preparing the materials and producing the products is great. Further, regarding their properties, since the sensors are produced in a process of complicated steps (in particular, for accurate positioning in forming constitutive elements on a substrate), they are unsatisfactory in point of the coefficient of variation (CV) thereof as an index of the fluctuation or distribution of the sensor characteristics of the products produced. In addition, since the shape change of a biosensor causes the reduction in the measurement accuracy and reproducibility thereof, the biosensor is desired to keep long-term shape stability with no warping or deformation of the cover and others thereof after production.

To solve the above-mentioned problems, the invention provides a biosensor produced by folding or bending or folding and bending a sheet of an electrically-insulating flat substrate.

### Biosensor

The biosensor of the invention may comprise an electrode disposed in a space sandwiched between a substrate and a cover, a sample inlet port for injecting a sample into the space, and a sample transfer path extending from the sample inlet port to pass through the electrode, in which the substrate and the cover are formed by folding and bending a sheet of an electrically-insulating plate member, the electrode is fixed on the surface of the plate member, the plate member is folded and bent with its surface inside it so that the electrode is disposed in the space sandwiched between the substrate and the cover, and the sample transfer path is disposed on the surface of the plate member and is defined by an adhesive layer for face-to-face disposing the substrate and the cover.

According to the invention, an electrode and an adhesive layer are formed on the surface of a sheet of an electrically-insulating plate member, and the plate member is folded and bent to produce a biosensor in a simple manner.

In the above, for more simply producing the biosensor, perforations may be formed along the part of the plate member along which the plate member is to be folded and bent.

The biosensor of the invention may comprise a sensor body formed by bending a sheet of electrically-insulating plate member in a cylindrical structure, an electrode disposed on the inner wall of the sensor body, a sample inlet port formed on one end or the side face of the cylinder, and a sample transfer path extending from the sample inlet port to pass through the electrode. The cylindrical structure may be columnar, oval-columnar, semicircle-columnar, fan-columnar, crescent-columnar, triangle-columnar, square-columnar or polygon-columnar.

According to the invention, an electrode may be fixed on the surface of a sheet of an electrically-insulating plate member and the plate member may be worked into a cylinder structure, whereby a cylindrical biosensor equipped with a sample transfer path may be produced.

The invention also provides a biosensor having a reagent layer provided on the electrode or the cover through which a sample transfer path passes. According to the invention, the sample fed from the sample transfer path may be kept in contact with the reagent layer on the electrode or on the cover, and the sample is thus reacted with the reagent. This reactor is monitored as an electrical change at the electrode.

The sample inlet port may be on one end or in an intermediate point of the sample transfer path so far as it is in a position in which a sample may be injected into the sample transfer path.

In the invention, a surfactant and/or a lipid may be applied around the sample inlet port, or to or around the surface of the sample transfer path and the reagent layer. Coated with a surfactant or a lipid, the area enables smooth travel of the sample around it. For the lipid, preferred is lecithin. For coating with it, the lipid is preferably dissolved in a solvent. When lecithin is used, then the solvent for it is preferably 2-butanol. The sample inlet port may be so designed that its tip has a curved part.

The plate member may be selected from any of plastics, biodegradable materials or paper, so far as it is electrically insulating. One preferred example of the plastics is polyethylene terephthalate.

The electrode may be formed of any of carbon, silver, silver/silver chloride, platinum, gold, nickel, copper, palladium, titanium, iridium, lead, tin oxide or platinum black. The carbon may be selected from any of carbon nanotubes, carbon microcoils, carbon nanohorns, fullerenes, dendrimers or their derivatives. The electrode may be formed on the plate member by any of a screen-printing process, a vapor deposition process, a sputtering process, a foil-sticking process, or a plating process.

The electrode may be defined by a resist layer. The resist layer may be formed according to a screen-printing process.

The adhesive layer may also be formed according to a screen-printing process. The adhesive is preferably an acrylic resin, more preferably a thermosetting resin or a photocurable resin, even more preferably a visible ray-curable acrylic resin.

The reagent layer may be formed according to a screen-printing process or a dispenser process; and the fixation of the reagent layer to the electrode surface, the plate member surface or the cover may be effected according to a drying-accompanied adsorption or covalent-bonding process.

Preferably, the reagent layer is formed after purification. For the purification, for example, the reagent may be filtered through a membrane. Through the purification, impurities may be removed from the reagent.

Not limited to in one position, but the reagent layer may be disposed in two or more positions. In such a case, two or more different types of reagent layers may be provided. When such reagent layers are formed in two or more positions, then a convex partition may be provided between them. The convex partition may be formed according to a screen-printing process. The convex partition may be formed of any of carbon, resist or water-absorbent material.

The reagent layer may contain any of enzyme, antibody, nucleic acid, primer, peptide nucleic acid, nucleic acid probe, microorganism, organelle, receptor, cell tissue, molecule identification element such as crown ether, mediator, intercalator, coenzyme, labeled antibody substance, substrate, inorganic salt, surfactant, lipid, or their combinations. The enzyme may be any of an oxidase or dehydrogenase enzyme such as glucose oxidase, fructosylamine oxidase, lactate oxidase, urate oxidase, cholesterol oxidase, alcohol oxidase, glutamate oxidase, pyruvate oxidase, glucose dehydrogenase, lactate dehydrogenase, alcohol dehydrogenase, as well as cholesterol esterase, protease, DNA polymerase, or their combinations.

The reagent layer may contain not only enzyme alone but also a combination of enzyme and mediator. The mediator may be selected from potassium ferricyanide, ferrocene and benzoquinone. The reagent layer contains a combination of an inorganic salt such as sodium chloride or potassium chloride, and quinhydrone.

The reagent layer may contain a combination of primer, DNA polymerase and deoxyribonucleotide triphosphate. Further, the reagent layer may contain a combination of an inorganic salt such as sodium chloride or potassium chloride, and quinhydrone, as combined with primer, DNA polymerase and deoxyribonucleotide triphosphate.

When the biosensor is used as a DNA chip, then a nucleic acid probe is preferably immobilized as a reagent layer therein.

The invention relates to a biosensor device comprising the biosensor of the invention as above, a measuring unit for measuring an electric value at the electrode of the biosensor, and a display unit for displaying the value measured at the measuring unit. For the measuring method at the measuring unit, employable is any of potential step chronoamperometry, coulometry or cyclic voltammetry. The device may have a bluetooth mounted therein as a wireless unit.

### Method for Producing Biosensor

A method for producing the biosensor of the invention is for producing a biosensor which comprises an electrode disposed in a space sandwiched between a substrate and a cover, a sample inlet port for injecting a sample into the space, and a sample transfer path extending from the sample inlet port to pass through the electrode and in which the sample transfer path is defined by an adhesive layer for face-to-face disposing the substrate and the cover;, and the method is characterized by comprising a folding and bending step of a plate member that is as follows:

A step of forming a substrate and a cover from a sheet of electrically-insulating plate member by folding and bending the plate member such that the electrode formed on the surface of the plate member could face inside thereof, to thereby dispose the electrode in the space sandwiched between the substrate and the cover.

According to the production method, a biosensor can be produced in a simple manner. The method of forming the electrode and the adhesive layer (sample transfer path) is as mentioned hereinabove.

The method for producing the biosensor of the invention may comprise the above-mentioned folding and bending step, and a step of cutting a foldable part to be a folded and bent site of the plate member.

In this description, the "folded part" means a folded and bent site of a plate member.

Since the folded part is cut, the stress to the folded part may be removed, and the adhesion between the substrate and the cover may be kept firm and tight for a long period of time.

Preferably, the cutting at the folded part is attained along perforations formed in the part. For the cutting, for example, employable is a method of folding the part and cutting it with a surgical knife along the perforations.

The method for producing the biosensor of the invention preferably includes a folding and bending step for the plate member, and a step of fixing the substrate and the cover by compression or modification working of the substrate or the cover, or application of a curing agent or a thermal-shrinking agent to the folded part, or fitting of a fixation tool (fixation step).

The compression, the modification working, the application of a curing agent or a thermal-shrinking agent, or the fitting of a fixation tool may be carried out singly or as combined.

The method for producing the biosensor of the invention includes a step of folding and bending a sheet of a plate member to form a substrate and a cover. In this, therefore, just after the plate member has been folded and bent, the folded and bent site (folded part) of the plate member may be restored to its original condition and the substrate or the cover may be warped or deformed. Accordingly, the method includes the above-mentioned fixation step, in which the substrate or the cover is prevented from warping or deforming.

The fixation method may comprise compression or modification working of the substrate or the cover, or application of a curing agent or a thermal-shrinking agent, or fitting of a fixation tool.

### <Compression>

Compression is a method of fixing at least a part of the biosensor under pressure. The pressure to be applied to the substrate or the cover may be any one that is uniform and does not break the biosensor.

### <Modification Working>

Modification working means a method of modifying the physical properties of the constitutive members of the biosensor or the physical properties of the materials added to the constitutive members of the biosensor, by heat, light or chemicals applied thereto. The modification working may remove or reduce the warping stress applied to the folded part, and may prevent the substrate or the cover from being warped and deformed.

Modification working methods (1) to (4) employable in the invention are mentioned below.
(1) Modification working by heat or thermal compression:
[1] Method of heating or thermally fixing under pressure the folded part of the biosensor or the folded part and around it thereof, or any other part of the biosensor.
   According to the thermal modification, for example, the folded and bend site (folded part) of the folded and bent plate member, or the folded part and around it may be overheated by the use of a mold having the same shape as that of the folded part, whereby the member itself of the folded part may be modified and the warping force applied to it may be removed. In place of using such a mold, hot wires may also be used for modifying the folded part.
   The "other part of the biosensor" is preferably the surface thereof above the substrate and cover surface, not having a reagent layer just below it. The heating method is preferably for exposing the site not having a reagent layer to heat by the use of the above-mentioned mold or hot wire to thereby modify the intended part of the member.
   The method of thermal fixation under pressure is also preferably effected in the same manner as that of the heating method as above. Briefly, a hot mold is pressed against the intended site from above or below the substrate surface of the biosensor or from both the two thereof.
   The temperature for the heating or thermal fixation under pressure may vary depending on the material of the plate member, but is generally preferably from 50 to 300°C, more preferably from 50 to 150°C.
[2] The adhesive layer of the biosensor contains a thermosetting resin, and the modification working is according to a method of heating or thermally fixing under pressure the folded part of the biosensor or the folded part and around it thereof, or any other part of the biosensor, thereby to cure all or a part of the adhesive layer.
   When the biosensor of the invention has an adhesive layer, then a thermosetting resin is mixed in the adhesive layer or a thermosetting resin itself is used as the adhesive in the layer, and the plate member is folded and bent to form a biosensor, and thereafter this is subjected to the above-mentioned treatment of heating or thermal fixation under pressure.

In this case, the thermosetting resin includes, for example, epoxy resin, urea resin, melamine resin, phenolic resin, acrylic resin. Of those, acrylic resin is preferred. The epoxy resin may serve also as the adhesive itself in the layer.
A crosslinking agent and a polymerization initiator may be suitably added to the layer along with the thermosetting resin therein.
(2) Modification Working by Light.
[1] The plate member for the biosensor comprises a light-transmitting material, and the adhesive layer contains a photocurable resin, and the modification working is effected by irradiating the biosensor with light to thereby cure the adhesive layer.

When the biosensor of the invention has an adhesive layer, then a photocurable resin is mixed with the adhesive layer, or a photocurable resin itself is used to form the adhesive layer, and the plate member is folded and bent to form a biosensor, and thereafter the adhesive layer is irradiated with light and the photocurable resin is thereby cured. In this case, the plate member to form the substrate and the cover must be formed of a light-transmitting material. The light-transmitting material includes, for example, polyvinyl chloride, polycarbonate, polyester, polyethylene terephthalate. Preferably, the light irradiation is effected principally at the folded part as the center for it.
The photocurable resin includes, for example, UV-curable epoxy resin, UV-curable acrylic resin, UV-curable silicone resin, UV-curable silicone gel, delayed photocurable resin, visible ray-curable resin for dental use, visible ray-curable acrylic resin. Of those, the UV-curable acrylic resin, the delayed photocurable resin and the visible ray-curable acrylic resin may serve also as an adhesive itself.
A crosslinking agent and a polymerization initiator may be suitably added to the layer, along with the photocurable resin therein.
The light for irradiation varies depending on the type of the photocurable resin used. For example, when a UV-curable resin is used, then UV rays may be used for it; and when a visible ray-curable resin is used, then visible light may be used for it. For the light irradiation, employable are a heavy hydrogen lamp, a high-pressure mercury lamp, a low-pressure mercury lamp, a metal halide lamp and a non-electrode UV lamp for UV rays; and for visible rays, employable are a halogen lamp, a xenon lamp, a metal halide lamp, an incandescent lamp (tungsten lamp), a fluorescent lamp, a light-emitting diode and an organic light-emitting device.
The type of the light-transmitting plate member varies, depending on the type of the light used for it. For example, it includes polyvinyl chloride, polycarbonate, polyester, polyethylene terephthalate.
(3) When the plate member itself is a thermally or optically-modifying material, the following methods are employable.
[1] The plate member of the biosensor contains a thermosetting resin, and the modification working is attained by heating and curing all or a part of the plate member.
[2] The plate member of the biosensor contains a photocurable resin, and the modification working is attained by irradiating the plate member with light and curing it.

In addition, the plate member itself may be formed of a thermosetting resin or a photocurable resin. When the plate member is formed of a thermosetting resin, then the biosensor is formed by folding and bending, and thereafter the folded part or the folded part and around it or any other part of the biosensor is heated or thermally fixed under pressure, as in the above (1) [1]. In this, the thermosetting resin may be the same as in the above.
When the plate member is formed of a photocurable resin, then the biosensor is formed by folding and bending, and thereafter it is irradiated with light in the same manner as in the above (2)[1]. In this, the photocurable resin may be the same as in the above.
(4) A solvent may be infiltrated into the folded part in the manner as follows:
[1] A solvent is applied to the surface of the folded part of a biosensor, or to the surface of the folded part and around it, to thereby make the solvent infiltrated into it.
In this case, a solvent is applied to the folded part or to the folded part and around it, whereby the solvent is infiltrated into the plate member, and the warping force remaining in the plate member may be removed or reduced.
The solvent may be any one capable of being infiltrated into the plate member. Though depending on the material of the plate member, an organic solvent is preferred. Some examples of preferred combinations of the plate member and an organic solvent for it are mentioned below.

| | |
|---|---|
| polytetrafluoroethylene | ether |
| polyethylene | amylbenzene |
| polyisobutylene | xylene |
| polystyrene | methyl chloride |
| chlorine rubber | methylene chloride |
| vinyl acetate resin | ethylene chloride |
| polymethyl methacrylate | dioxane |
| vinyl chloride resin | cyclohexane |
| epoxy resin | acetone |
| acetyl cellulose | isopropyl alcohol |
| nitrocellulose | dimethylformamide |
| phenolic resin | nitromethane |

As in the above, the biosensor of the invention is preferably modified and worked according to the method mentioned above.

### <Application of Curing Agent or Thermal-Shrinking Agent>

Application of a curing agent or a thermal-shrinking agent to the folded part is a method of applying a curing agent of a thermal-shrinking agent to the folded part of the constitutive member of the biosensor, and curing the curing agent or semi-curing the thermal-shrinking agent. According to the method, the warping stress given to the folded part may be depressed and the substrate and the cover may be prevented from being warped and deformed.
(1) A method of coating the folded part with a solidifying agent (thermosetting resin or photocurable resin) or a thermal-shrinking agent.
   [1] A method comprising applying a thermosetting resin to the folded part of the biosensor or to the folded part and around it, then heating the thermosetting resin to cure it.
   [2] A method comprising applying a photocurable resin to the folded part of the biosensor or to the folded part and around it, then irradiating the photocurable resin with light to cure it.
   [3] A method comprising applying a thermal-shrinking agent to the folded part of the biosensor or to the folded part and around it, then heating the thermal-shrinking agent to semi-cure it.

Preferably, the coating is uniformly effected on the outer surface of the folded part or on that of the folded part and around it.

In this case, the above-mentioned thermosetting resin or photocurable resin is applied to the folded part or to the folded part and around it, and the resin thus having adhered to the folded part is heated or irradiated with light to cure it in the same manner as above.

In another case, the above-mentioned thermal-shrinking agent is applied to the folded part or to the folded part and around it, and the thermal-shrinking agent thus having adhered to the folded part is heated to semi-cure it in the same manner as above. The thermal-curing agent includes, for example, polyolefin, fluororesin and polyethylene.

In the manner as above, the warping and deformation of the substrate or the cover, which may start from the folded part, may be prevented.

### <Fixation Tool>

For fixation with a fixation tool, for example, employable is a mode of pinching, encapsulating, capping, clamping with an elastic member, working with a thermal-shrinking agent, or fitting of an adhesive tape.

Pinching means a method of using a pinching and fixing tool such as a clip for pinching and fixing at least a part of the biosensor.

Encapsulation means a method of using a shaped fixation tool for encapsulating and fixing at least a part of the biosensor.

For capping, it is desirable that a cap is fitted to the end of the folded part of the biosensor. The material of the cap is preferably any of the following elastic member, thermal photo-curing agent, photo-curing agent or thermal-shrinking agent.

For clamping with an elastic member, for example, the elastic member may be natural rubber, synthetic rubber (e.g., butyl rubber) or silicone.

The thermal-shrinking agent includes, for example, polyolefin, fluororesin, polyethylene.

For carrying out the above-mentioned fixation method, for example, it is more desirable that an adhesive such as an acrylic adhesive is applied to the inside of the fixation tool (e.g., the part to be in contact with the inside part of the sensor, such as the elastic member or thermal-shrinking agent). With that, the fixation may be more ensured, and warping or deformation of the substrate or the cover may be prevented more surely.

The adhesive tape includes cellophane tape, polypropylene tape, acetate tape, Kapton (polyimide) tape, metal tape (e.g., aluminium, copper), paper tape, nonwoven fabric tape. As an adhesive for these tapes, generally preferred is an acrylic resin.

According to the fixation method as above, the biosensor of the invention may have a fixation tool for preventing the substrate and the cover thereof from being warped and deformed.

As is obvious from the above-mentioned description, a biosensor can be produced by folding or bending or folding and bending a sheet of an electrically-insulating flat substrate according to the invention, and the method is good in point of its producibility and economic aspect and from the viewpoint of a reduced environmental load to it. In using the biosensor of the invention for measurement, a sample fluid may be quantitatively introduced into the structure of the biosensor by utilizing capillarity, and the biosensor enables accurate measurement. Accordingly, a biosensor having good reproducibility can be realized according to a simple production method.

The method for producing the biosensor of the invention comprises folding and bending a sheet of a plate member, and it gives the intended biosensor in an extremely simple manner. In addition, when the production method is combined with a step of fixing the folded and bent plate member, then the biosensor thus produced is prevented from being warped or deformed.

When the method for producing the biosensor of the invention is combined with a step of cutting the folded and bent plate member, then the biosensor thus produced is also prevented from being warped or deformed.

### Brief Description of the Drawings

Fig. 1 shows a structure of a conventional sensor (JP-A-1-291153).
Fig. 2 shows typical examples of a biosensor of an embodiment of the invention. (a) shows a development view (left) and a constitutional view (right) of a folded biosensor; and (b) shows a development view (left) and a constitutional view (left) of a cylindrical biosensor.
Fig. 3 shows a development view (left) and an assembled constitutional view (right) of another folded (laminate-structured) biosensor.
Fig. 4 shows a development view (left) and an assembled constitutional view (right) of another folded (laminate-structured) biosensor.
Fig. 5 shows a development view (left) and an assembled constitutional view (right) of another folded (laminate-structured) biosensor with facing electrodes.
Fig. 6 shows a development view (left) and an assembled constitutional view (right) of another folded (laminate-structured) biosensor with facing electrodes.
Fig. 7 shows a development view (left) and an assembled constitutional view (right) of another folded (laminate-structured) biosensor with facing electrodes.
Fig. 8 shows a development view (left) and an assembled constitutional view (right) of another folded (laminate-structured) biosensor with facing electrodes.
Fig. 9 shows a development view (left) and an assembled constitutional view (right) of another folded (laminate-structured) biosensor with facing electrodes.
Fig. 10 shows a development view (left) and an assembled constitutional view (right) of another folded (laminate-structured) biosensor.
Fig. 11 shows, as (a) tc (c), cross-sectional views cut along an A-A' line in the development view of a constitution of a folded part shown in the above.
Fig. 12 shows a development view (left) and a constitutional view (right) of a folded biosensor having a curved tip.
Fig. 13 shows another development view (left) and a constitutional view (right) of a folded biosensor having a curved tip.
Fig. 14 shows another folded (laminate-structured) biosensor; (a) and (c) each show a development view (left) and an assembled constitutional view (right) of an example having parallel electrodes; (b) show those of an example having facing electrodes; and (e) to (g) each show those of an example having three-pole electrodes.
Fig. 15 shows embodiments of other folded (laminate-structured) biosensors.
Fig. 16 shows embodiments of various cylindrical biosensors; (a) to (h) all show development views (left) and assembled constitutional views (right).
Fig. 17 shows embodiments of various cylindrical biosensors having a triangular cross section; (a) to (h) all show development views (left) and assembled constitutional views (right).
Fig. 18 shows embodiments of various cylindrical biosensors having a square cross section; (a) to (h) all show development views (left) and assembled constitutional views (right).
Fig. 19 ((a) to (d)) shows development views of folded biosensors having plural reagent layers for measuring multiple items.
Fig. 20 ((a) to (d)) shows development views of folded biosensors having plural reagent layers for measuring multiple items.
Fig. 21 ((a) to (d)) shows development views of folded biosensors having plural reagent layers for measuring multiple items.
Fig. 22 shows an example of application of a laminate-type biosensor to DNA chips.
Fig. 23 is a graph showing a blood sugar calibration curve in Example.
Fig. 24 shows a method of thermal modification of the folded part of a biosensor by the use of a mold.
Fig. 25 shows a method of thermal modification of the folded part of a biosensor by the use of hot wires.
Fig. 26 shows a method of modification of the end of the folded part of a biosensor in a mode of thermal pressing.
Fig. 27 shows a method of modification of both the end of the folded part and the end of the cover of a biosensor in a mode of thermal pressing.
Fig. 28 shows a method of photocuring the folded part of a biosensor and around it by the use of light rays.
Fig. 29 shows a method of curing the folded part of a biosensor and around it in a mode of chemical treatment comprising dipping it in a chemical reagent.
Fig. 30 shows a method of curing the folded part of a biosensor and around it in a mode of chemical treatment comprising contacting it with a chemical reagent-infiltrated roller.
Fig. 31 shows a method of fixing the end of the folded part of a biosensor by the use of a clip (large).
Fig. 32 shows a method of fixing the end of the folded part of a biosensor by the use of a clip (small).
Fig. 33 shows a method of fixing the end of the folded part of a biosensor by pinching it from its one side by the use of a clip (large).
Fig. 34 shows a method of fixing the end of the folded part of a biosensor by pinching it from both sides by the use of two clips (small).
Fig. 35 shows a method of fixing the end of the folded part of a biosensor by capping it.
Fig. 36 shows a method of fixing the end of the folded part of a biosensor by the use of a frame.
Fig. 37 shows a method of fixing the end of the folded part of a biosensor by the use of a ring-shaped elastic member.
Fig. 38 shows a method of fixing the end of the folded part of a biosensor by the use of a tubular elastic member.
Fig. 39 shows a method of fixing the end of the folded part of a biosensor by winding an adhesive tape around it.

### [Description of Reference Numerals]

- 1: Substrate
- 2: Spacer
- 3: Cover
- 4: Electrode Pattern
- 5: Air Hole
- 6: Sample Fluid
- 7: Sample Inlet Port
- 8: Sample transfer path
- 9: Perforations
- 10: Adhesive Layer
- 11: Reagent Layer
- 12: Convex Part
- 13: Air Exhaust Port
- 101: Biosensor
- 102: Plate Member
- 103: Electrode
- 104: Sample Inlet Port
- 105: Folded Part
- 106: Modification and Working Device
- 107: Modified and Worked Part
- 108: Fixation Tool
- 109: Cover End

### Detailed Description of the Preferred Embodiments

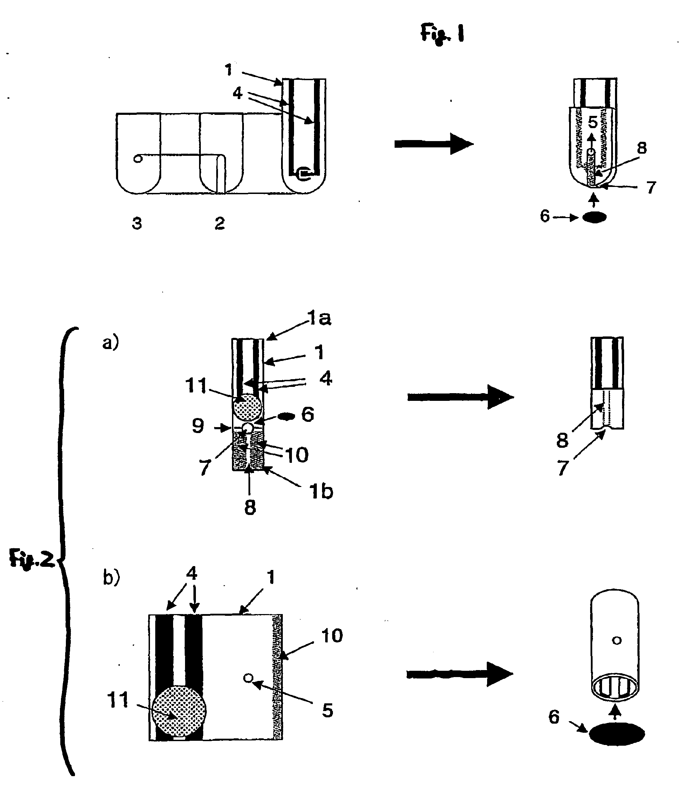

Embodiments of the invention are described below with reference to the drawings. Fig. 2 shows typical structures of a biosensor of the invention; (a) shows an example of a folded biosensor; and (b) shows an example of a cylindrical biosensor.

Fig. 2(a) left shows a development view of a biosensor. The biosensor is composed of a plate member 1 having a flat surface. The wording "flat surface" as referred to herein is meant to indicate the absence of surface roughness to be formed by artificial cutting, adhesion, etching or the like. The plate member 1 has perforations 9 for facilitating its folding and bending working. The plate member 1 is divided into two parts by the perforations 9, in which the upper part is a substrate part 1a that is to be a substrate after folding and bending working to be mentioned below; and the lower part is a cover part 1b that functions as a cover after the folding and bending working.

A pattern 4 including an electrode is formed on the surface of the substrate part 1a of the plate member 1. Regarding the electrode pattern 4, the lower end thereof in the drawing is folded and bent like an L-form, and the L-shaped part perpendicularly crosses the reagent transfer path 8 that will be mentioned below. If desired, a reagent layer 11 may be provided in the L-shaped part of the electrode pattern 4.

On the other hand, an adhesive layer 10 is provided on the surface of the cover part 1b. The adhesive layer 10 has a role for sticking and fixing the folded substrate part 1a and the cover part 1b and additionally another role of defining the sample transfer path 8. Accordingly, the adhesive layer 10 is provided on both sides of the cover part 1b except the center part that is to be the sample transfer path 8. At the position at which the sample transfer path 8 crosses the perforations 9, formed is a sample inlet port 7 for injecting a sample 6 into the sample transfer path 8. In that manner, after the electrode 4, the adhesive layer 10 for defining the sample transfer path 8, and further the sample inlet port 7 have been formed on the plate member 1, then the plate member 1 is folded and bent along the perforations 9, whereby a biosensor is produced as in Fig. 2(a) right. The opposite (air exhaust port) to the sample inlet port functions for air removal during the production. The reagent layer 11 may be provided on the electrode as so mentioned hereinabove, but it may be provided on the cover part 1b.

When the biosensor is used for detection, then the sample inlet port 8 formed at the lower end thereof is kept in contact with a sample 6 so as to suck up the sample 6. The thus-sucked up sample 6 is brought into contact with the reagent layer 11 while passing through the sample transfer path 8, and the reagent reacts with the intended component in the sample. The electrochemical change of potential, current or the like caused by the reaction is detected with the electrode. When the reagent layer is not in the sensor, then the intended component is detected only by the electrode.

Having the constitution as above, the biosensor can be produced in a process of one-time folding, and therefore it does not require any complicated positioning that is indispensable in lamination in producing conventional sensors. The advantages of the biosensor of the invention are that the production process may be simplified and the producibility of the products may be increased.

Other embodiments of a folded biosensor are shown in Figs. 3 to 16. In Fig. 2, the sample transfer path is provided in the lengthwise direction of the plate member 1; but in Fig. 3, the adhesive layer 10 in the cover part 1b is divided into upper and lower parts, and the sample transfer path 7 is therefore formed to laterally cross the plate member 1. In that manner, the sample transfer path 7 extends in the lateral direction, and therefore the electrode pattern 4 is not required to be folded at its tip like an L-form as in Fig. 2(a), but may have a pattern of two electrodes extending in parallel to each other. The plate member 1 with the electrode and the adhesive layer thus formed thereon is folded along the perforations 9, whereby a sample transfer path 8 is formed and a sample inlet port 7 is formed at its one end. This constitution does not require the formation of the sample inlet port by working the plate member 1 as in Fig. 2, and therefore, the process for producing it may be further simplified.

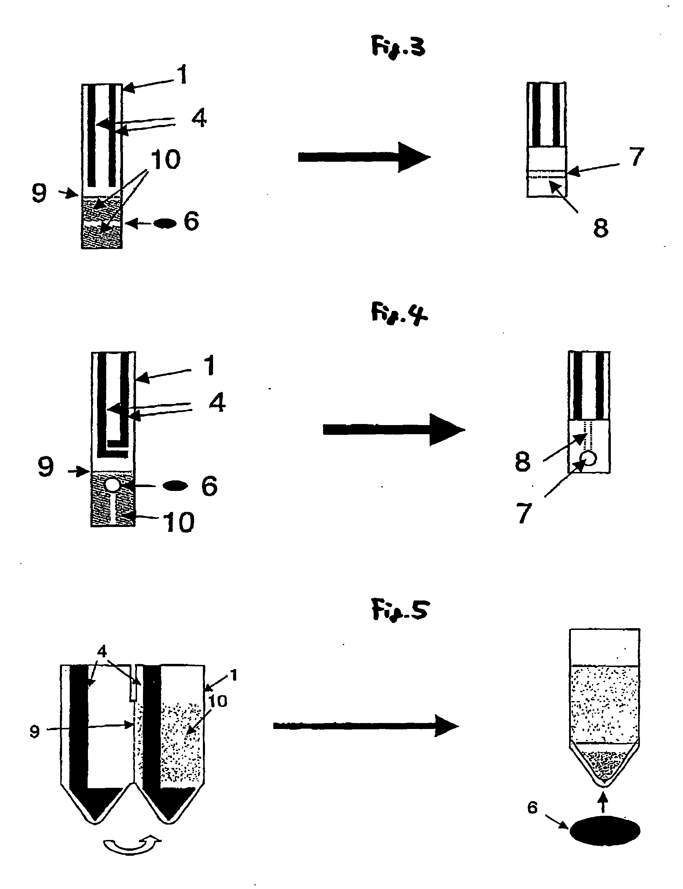

It is not always necessary to provide the sample inlet port at the end of the upper and lower parts or the side face, like Figs. 2 and 3. For example, as in Fig. 4, the sample inlet port 7 may be formed midway the sample transfer path 8. Precisely, the sample inlet port 7 may be formed on the sample transfer path 8 of the cover part 1b, but not on the perforations 9 as in Fig. 2(a). In this constitution, the sample inlet port 8 is formed on the cover face, like in Fig. 4, right.

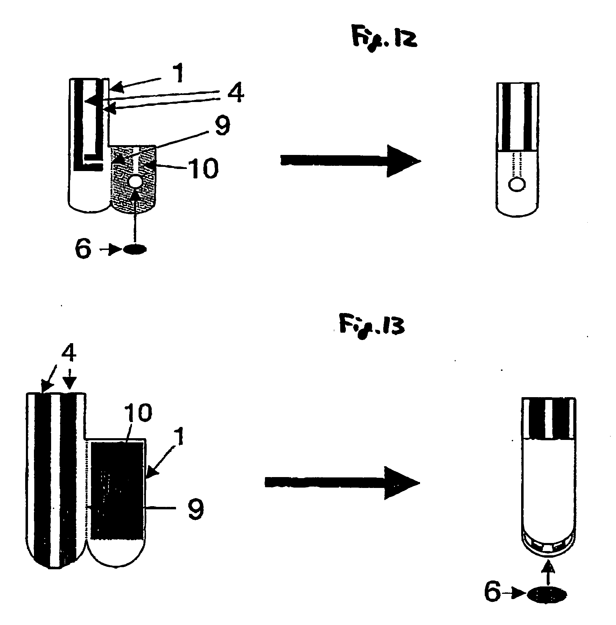

The configuration of the substrate part and the cover part in the plate member is not limited to upper and lower positions as in Figs. 2(a), 3 and 4, but may be left and right positions as in Fig. 10. Fig. 10 is a modification of Fig. 3. When the substrate part and the cover part are positioned in the left and the right, as in Fig. 10, then an air exhaust port 13 must be provided for discharging the sample 6 injected through the sample inlet port 7.

The above-mentioned electrodes may be disposed on the side of the cover part 1b, not limited to the side of the substrate part 1a of the plate member 1. Further, as in Fig. 5, an electrode may be fixed to both the substrate part 1a and the cover part 1b to construct a facing electrode configuration structure. In the case of the biosensor of Fig. 5, its bottom is formed to be triangular as in its right-side figure, and the tapered part of the bottom functions as a sample inlet port. The sample sucked up through the sample inlet port spreads all over the sample transfer path above the triangle where an adhesive layer 10 is not provided, and then it is caught between the electrodes that form a facing structure and is analyzed therein.

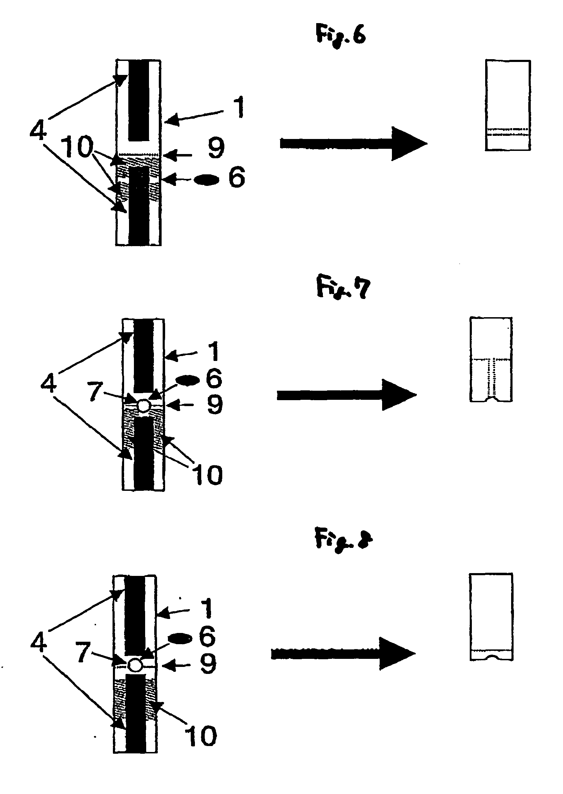

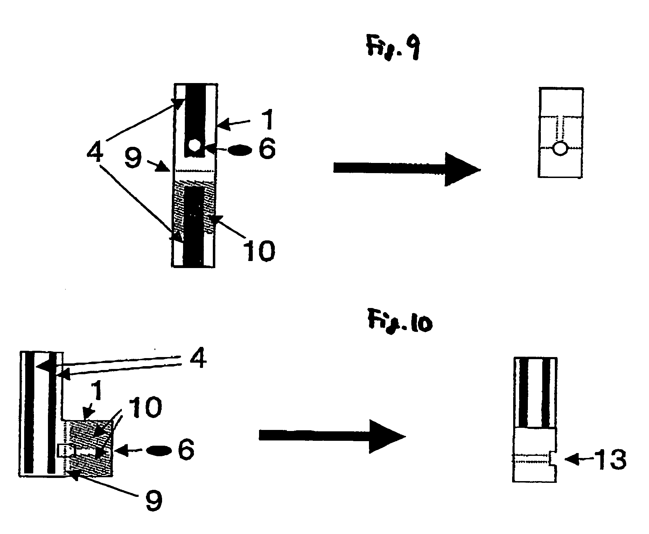

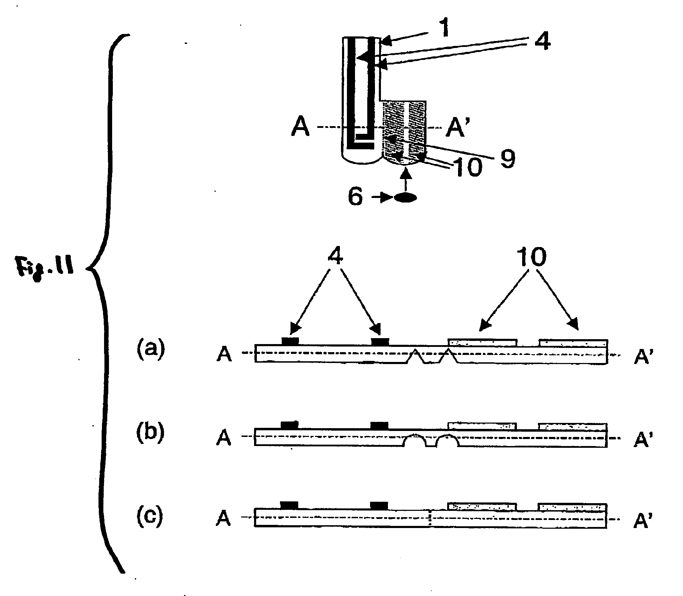

Other examples of the facing electrode structures are shown in Figs. 6, 7, 8, 9, Fig. 14(b), Fig. 15 (a), (b), (c), (d), (e), (f), (g). In Fig. 6, an electrode is fixed to the substrate part 1a and the cover part 1b of the plate member 1, and the two electrodes form a facing structure. A sample transfer path 8 is formed, as defined by an adhesive layer 10 so that it may perpendicularly crosses the electrodes. Fig. 7 is the same as Fig. 6 in point of the electrode configuration. In the former, however, a sample inlet port 7 is provided on perforations 9, and from the sample inlet port 7, a sample transfer path 8 is formed, as defined by an adhesive layer 10 along an the electrode pattern 4. Fig. 8 is also an example of a biosensor having a facing electrode structure, in which an adhesive layer 10 is provided except a minor electrode part around a sample inlet port 7. In the case of the biosensor of Fig. 8, a sample 6 injected through the sample inlet port is brought into contact with the end parts of the electrodes having a facing structure and is analyzed. In Fig. 9, a U-shaped adhesive layer 10 is provided on the electrode on either one of the cover part or the substrate part, and from the bottom of the U-shaped structure, a sample transfer path 7 is formed toward the sensor end along the electrode. On the other cover part or substrate part, a sample inlet port 7 is formed at the position facing to the bottom of the U-shaped structure. In the constitution of Fig. 9, a sample 6 injected through the sample inlet port 7 is fed to the sample transfer path 8 formed between the facing electrodes and the sample is analyzed while it is between them, as in the right-side drawing.

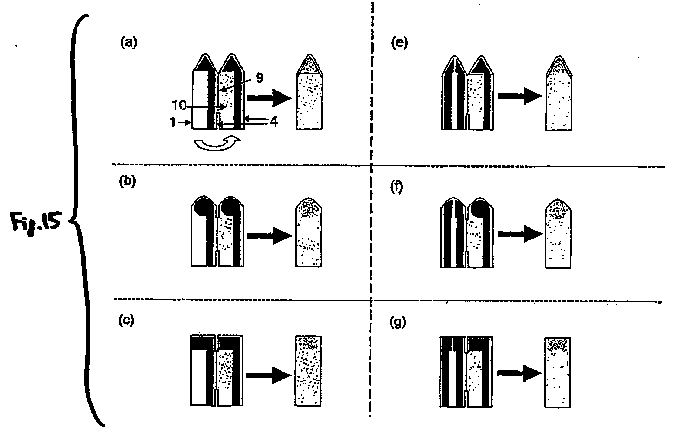

Regarding the electrodes therein, two electrodes, or that is, a working electrode and a counter electrode form the sensor unit in the above-mentioned examples. However, the electrodes of forming a sensor unit are not limited to two, but three electrodes, or that is, a working electrode, a counter electrode and a reference electrode may form a sensor unit. Examples comprising such three electrodes are shown in Fig. 14 (e) to (g) and Fig. 15 (e) to (g). For down-sizing sensors, it is desirable that the sensor unit comprises two electrodes of a working electrode and a counter electrode. On the other hand, for increasing the measurement reliability of sensors, it is desirable to employ a sensor unit with three electrodes having an additional reference electrode. In any case of two-electrode or three-electrode units, the size and the configuration of the electrodes are not specifically defined. In the three-electrode unit, the electrode configuration may be any of a parallel configuration (Fig. 14 (e), (g)) or a facing configuration (Fig. 14(f), Fig. 15 (e) to (g)) .

Preferred examples where the plate member 1 has perforations are mentioned above. However, the constitution of facilitating the folding and bending working herein is not limited to perforations, but as in Fig 11(a), triangular grooves may be formed, or fan-shaped grooves (c) as in (b) may be formed on the back of the plate member 1.

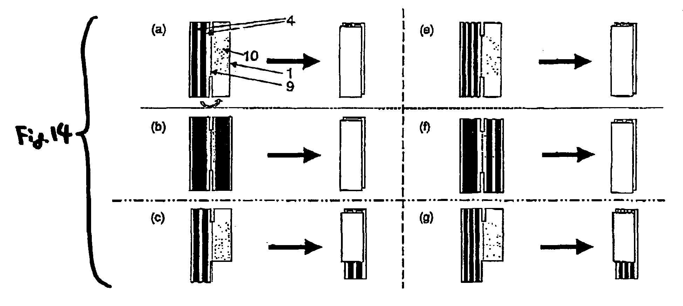

As in Figs. 12 and 13, and Fig. 15 (b) and (f) where a sample inlet port is at the tip of the sensor (in all the drawings, it is shown on the bottom side in the assembled constitutions), the tip may be formed to have a curved face in consideration of its contact with human bodies.

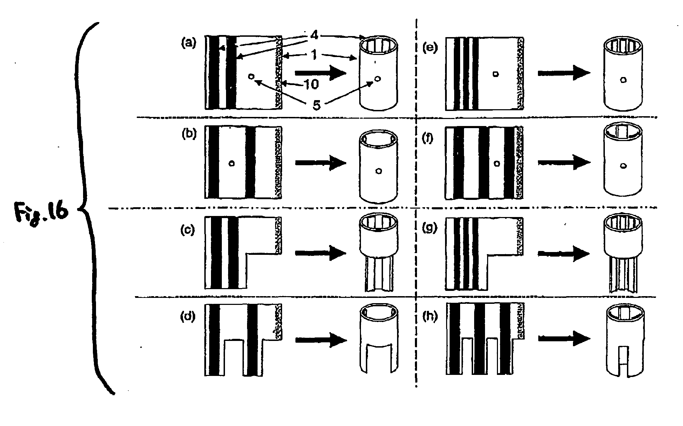

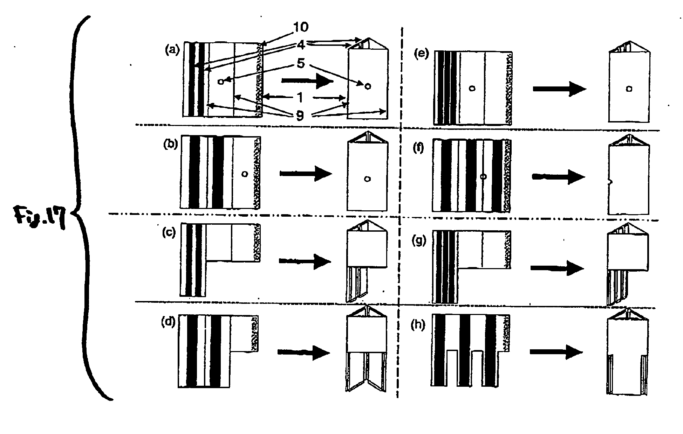

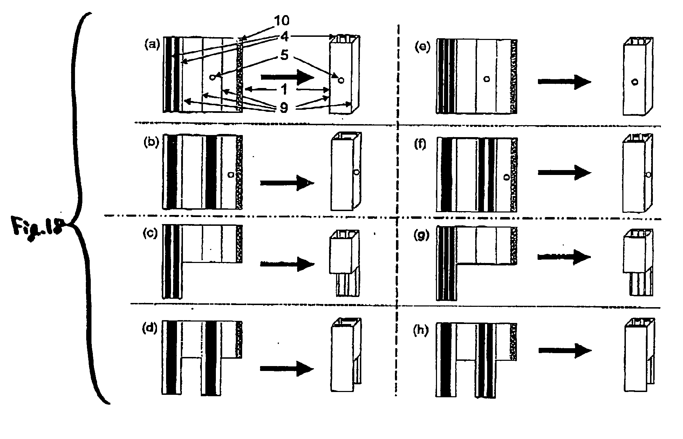

The present biosensor is not limited to the above-mentioned, folded laminate structures, but may be a cylindrical structure constructed by bending a sheet of a plate member. One typical constitutional example is shown in Fig. 2(b). Specifically, an electrode pattern 4 is formed on the surface of a sheet of an electrically-insulating plate member 1, and an adhesive layer 10 is provided on one end thereof. In that condition, this is bent once so that the adhesive layer is stuck to the back of the other end of the sheet, whereby a cylindrical sensor is simply constructed. Of this cylindrical sensor, the ends function as a sample inlet port and a discharge port, and therefore, a step of forming a sample inlet port in the plate member may be omitted for it. Other examples of a cylindrical sensor are shown in Fig. 16 to Fig. 18. Fig. 16 is an example of a cylindrical sensor; Fig. 17 is an example of a cylindrical senser having a triangular cross section; and Fig. 18 is an example of a cylindrical sensor having a square cross section. However, the invention should not be limited to these, but may be any other cylindrical-structured sensors having an oval, semicircular, fan-shaped or crescent-shaped cross section. The cylindrical sensors may have two electrodes or three electrodes, and the electrode configuration may be selected for them in any desired manner. In addition, the electrode configuration in these may be a parallel or facing configuration. Examples of a cylindrical biosensor structure having three electrodes are shown in Fig. 16 (e), (f), (g), (h), Fig. 17 (e), (f), (g), (h), Fig. 18 (e), (f), (g), (h). As a method of maintaining the three-dimensionally constructed sensor form of cylindrical-structured sensors, an adhesive is applied to the side surface parallel to the pattern electrode of the sensor, or to the sticking margin formed to extend from that side surface, and this is stuck to a predetermined site in three-dimensionally constructing the sensor whereby the three-dimensional form of the sensor may be maintained as such. In place of the adhesive, an adhesive double-coated tape may also be used.

In the above-mentioned drawings, a reagent layer is not always shown, but in the drawings where it is not shown, a reagent layer may be provided, if desired. For example, when a nickel electrode is used, then the sensor may be used as a protein sensor (US 5653864) for protein detection even though it has not a reagent layer. When a platinum electrode is used, then the sensor may be used as a conductivity sensor or a hydrogen peroxide sensor; and when further combined with an oxygen-permeable membrane and an electrode, then it may be used as an oxygen sensor. On the other hand, when a reagent layer is used, then various types of biosensor may be produced, for example, blood sugar sensors, urine sugar sensors, glycosylating hemoglobin sensors (JP-A-2001-204494), lactate sensors, urate sensors, cholesterol sensors, alcohol sensors, glutamate sensors and pyruvate sensors of using enzyme and mediator; pH sensor of using silver/silver chloride electrode, quinhydrone and inorganic salt; a pH sensor and a DNA primer; single nucleotide polymorphisms sensors of using a DNA polymerase; and DNA chips of using a immobilized nucleic acid probe, and these may be applied to various sensors of detecting various chemical and physical conditions. The reagent layer may be formed on or around an electrode through which a sample transfer path passes.

Around a sample inlet port and on the surface of a sample transfer path, a surfactant and a lipid may be applied for easy introduction of a sample.

The materials, the production methods and the applications of the above-mentioned embodiments are described in detail hereinunder.

As the plate member, usable are plastics such as polyethylene terephthalate, biodegradable materials such as polylactic acid, and paper.

The electrode material usable in the present sensors include metals such as platinum, gold, silver/silver chloride, silver copper, palladium, iridium, lead, nickel, titanium, tin oxide, platinum black. These have good conductivity, and may be formed according to vapor deposition, sputtering, plating, CVD, or coating and drying. Though inferior to platinum and gold in point of the conductivity thereof, carbon powder may readily form an electrode according to a screen-printing method by making it into a paste followed by applying it to a substrate, like silver powder. In addition, a particulate substance of platinum or gold may be formed into a paste and may be worked by printing.

As a carbon material, also usable are carbon nanotubes, carbon microcoils, carbon nanohorns, fullerenes, dendrimers and their derivatives. These are suitable for fixation of molecule identification elements or for electrode materials because of their peculiar characteristics (structure, conductivity).

In a protein sensor, nickel is preferred for the electrode material. Nickel may oxidize the amino group of protein under a predetermined condition and may be a protein sensor. It may be usable for FIA (flow injection analysis).

Preferably, the adhesive layer is formed according to a screen-printing process. An adhesive double-coated tape may also be used for it. The adhesive usable herein includes, for example, a bond, a sticky paste.

A reagent may be added to the adhesive layer, and an adhesive layer and a reagent layer may be formed at a time according to a screen-printing process.

Preferably, the reagent layer is formed according to a method comprising dropping a reagent in the form of an aqueous solution thereof through a dispenser and drying it. By controlling the viscosity thereof, the reagent layer may also be formed according to a screen-printing process.

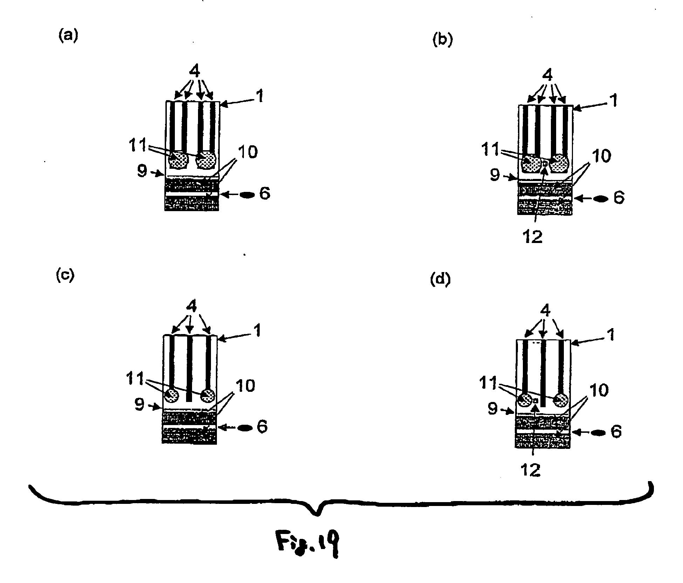

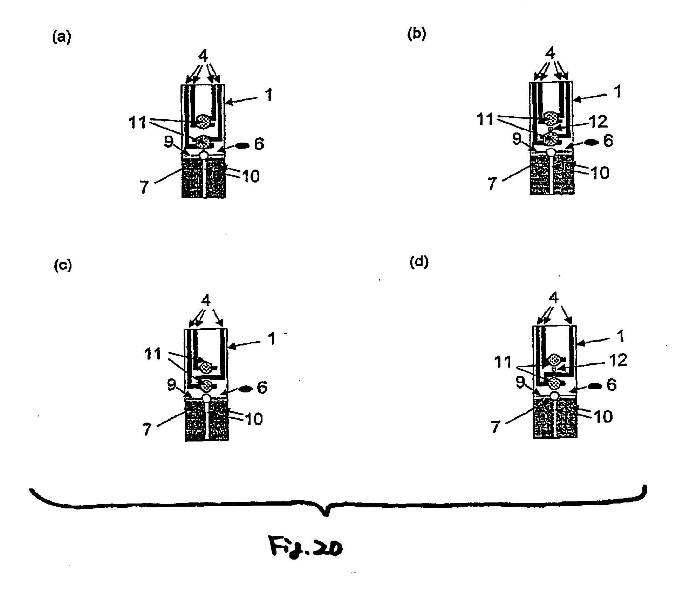

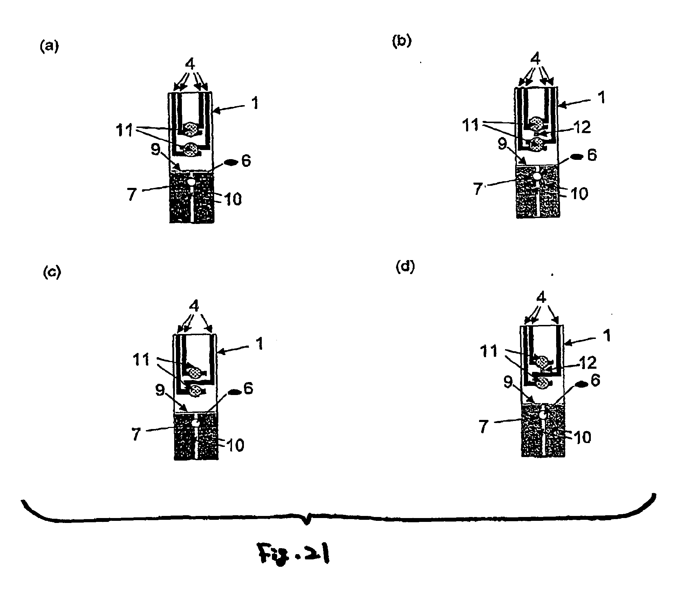

When the sensor has one reagent layer, then it may detect one substance. However, when two different types of substances are detected, then different types of reagent layers may e formed on a sheet of an electrically-insulating flat substrate (JP-A-1-291153), as in Figs. 19 to 21. In this case, a projection (12) may be formed of carbon, resist or water-absorbing material according to a screen-printing method in the intermediate space between the reagent layers for preventing the reagent layers from being mixed together, as in the drawings. In this case, the initial thickness of the projection must be lower than that of the adhesive layer, and when folded and bent, the top and the left and right sides of the projection must not be in contact with any others. This is for promoting the running of a sample through the sensor structure. When a water-absorbing substance is used, then it swells after a sample has passed through it, and it functions to prevent the dissolved reagents from being mixed together. When the number of the electrodes is not 4 (Figs. 19 to 21, (a), (b)) but is 3, then, for example, one center electrode may be used as a common counter electrode (Figs. 19 to 21, (c), (d)).

The bonding of the reagent to the electrode surface or to the substrate may be carried out according to an adsorption method or a covalent-bonding method after drying.

For the reagent, herein usable are enzyme, antibody, nucleic acid, primer, peptide nucleic acid, nucleic acid probe, microorganism, organelle, receptor, cell tissue, molecule identification element such as crown ether, mediator, intercalator, coenzyme, labeled antibody substance, substrate, inorganic salt, surfactant, lipid.

For example, in an enzyme sensor, the type of the enzyme serving as a molecule identification element is varied depending on the subject to be detected. For example, when the subject to be detected is blood sugar (glucose) or urine sugar, then glucose oxidase or glucose dehydrogenase is used; when the subject to be detected is glycosylating hemoglobin, then a mixture of fructosylamine oxidase and protease is used; when the subject to be detected is lactate, then lactate oxidase is used; when the subject to be detected is total cholesterol, then a mixture of cholesterol esterase and cholesterol oxidase is used; when the subject to be detected is urate, then urate oxidase is used; when the subject to be detected is ethanol, then alcohol oxidase is used; when the subject to be detected is glutamate, then glutamate oxidase is used; when the subject to be detected is pyruvate, then pyruvate oxidase is used.

In the above-mentioned enzyme sensors, an electron transmitter (mediator) is used along with enzyme. For the mediator, herein usable are potassium ferricyanide, ferrocene, ferrocene derivatives, nicotinamide derivatives, flavin derivatives, benzoquinone and quinone derivatives.

In a pH sensor, a reagent layer of an inorganic salt such as sodium chloride or potassium chloride and quinhydrone is formed on a substrate with a silver/silver chloride electrode and any other electrode formed thereon. In this case, the electrode-to-electrode potential change is measured.

In a single nucleotide polymorphisms (SNPs) sensor (A. Ahmadian et al., Biotechniques, 32, 748, 2002), a mixture of primer, DNA polymerase and deoxyribonucleotide triphosphate is additionally used as a reagent on the above-mentioned pH sensor. In this, when the subject DNA to be detected in a sample is complementary to the primer, then the pH change is measured.

In an immune sensor, an antigen-antibody reaction is utilized, and for example, when human serum albumin is measured, then an anti-albumin antibody is used as a molecule identification element therein. In the immune sensor, the electrode-to-electrode potential that varies by formation of an antigen-antibody complex shall be measured.

In a microorganisms sensor, microorganisms such as, for example, those of Pseudomonas fluorescence (subject to be detected: glucose) or Trichosporon brassicae (subject to be detected: ethanol) are used as a molecule identification element. These microorganisms are of oxygen respiration (aerobic), or produce a metabolite in the absence of oxygen, and the sensor with them is to electrically detect the oxygen respiration amount or the metabolite amount.

In an organelle sensor, used is a cell organelle as a molecule identification element. For example, when a mitochondrial electron transmitter granules are used, then NADH can be measured. This principle is as follows: NADH is oxidized by mitochondrial electron transmitter granules, whereupon this consumes oxygen, and on the basis of the oxygen amount in this stage as an index, NADH or NADPH may be measured.

In a receptor sensor, used is a rector of, for example, cell membrane as a molecule identification element. The object to be detected may be hormone or neurotransmitter. The detection principle is as follows: The receptor change is converted into a potential, and this is measured through the electrode in the sensor.

In a tissue sensor, used is an animal or plant tissue as a molecule identification element. For the animal or plant tissue, for example, herein usable is a frog skin, an animal liver section, or a cucumber or banana peel. The measurement principle is as follows: For example, in a sodium sensor using a frog skin tissue, the frog skin tissue selectively penetrates sodium ions, whereupon the potential of the skin tissue varies. Accordingly, the potential change is measured to determine the amount of sodium ions.

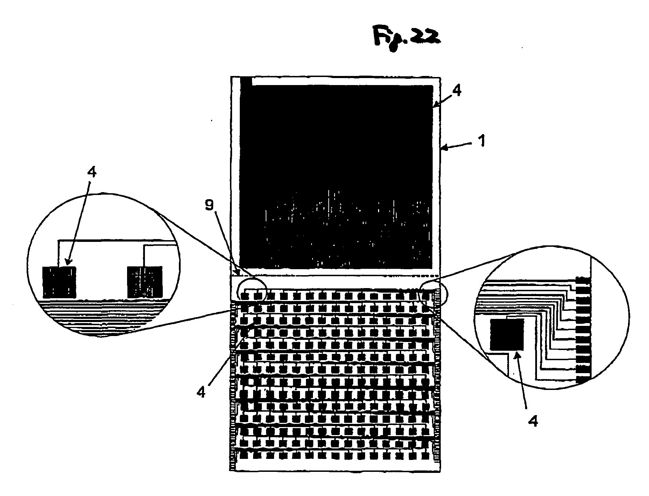

another example of the applications of the biosensors described herein is a DNA chip (JP-A-5-199898). On an electrode, array (US 4225410) as in Fig. 22, a large varieties of single-chain nucleic acid probes are immobilized, each complementary to a large varieties of subject genes to be detected. One type of a nucleic acid probe is immobilized to one electrode. For confirming the presence or absence of a large number of subject genes, a gene sample denatured to a single-chain form is hybridized with a nucleic acid probe, and then an electrochemically-active double-chain recognition body capable of specifically bending to a double-chain nucleic acid is added to it. After washed, the substrate is folded in the presence of a buffer, and a voltage is applied in order to it with the array electrode as a working electrode and the upper large electrode as a counter electrode. In that condition, when a double-chain form is formed, then the double-chain intercalator is oxidized and an oxidation current runs through the sensor. In the electrode where no double-chain form is formed, a current caused by the intercalator does not run through it. Depending on the position of the electrode where the current has run, the type of the nucleic acid probe is known, and therefore the presence or absence of the subject gene can be known and the qualification assay of the subject gene is possible. As the double-chain recognition factor, herein usable are an intercalator such as acridine orange, and a metallointercalator such as tris(phenanthroline)cobalt complex.

Preferably, the biosensor of the invention is stored in dry. Preferably, it is stored together with a desiccant. The desiccant includes active alumina, zeolite, silica gel, calcium chloride.

When the above-mentioned biosensor is used for measurement, then the biosensor is fitted to an apparatus, and the electric value generated in the biosensor is measured. For this measurement, the apparatus is provided with a measuring unit of measuring the electric value of the biosensor and a display unit of displaying the measured value. For the measuring method at the measuring unit, employable is any of potential step chronoamperometry, coulometry or cyclic voltammetry. The apparatus may comprise a memory unit for storing the measured values. In addition, it may have a wireless unit such as a bluetooth mounted therein for remote control of the measured values.

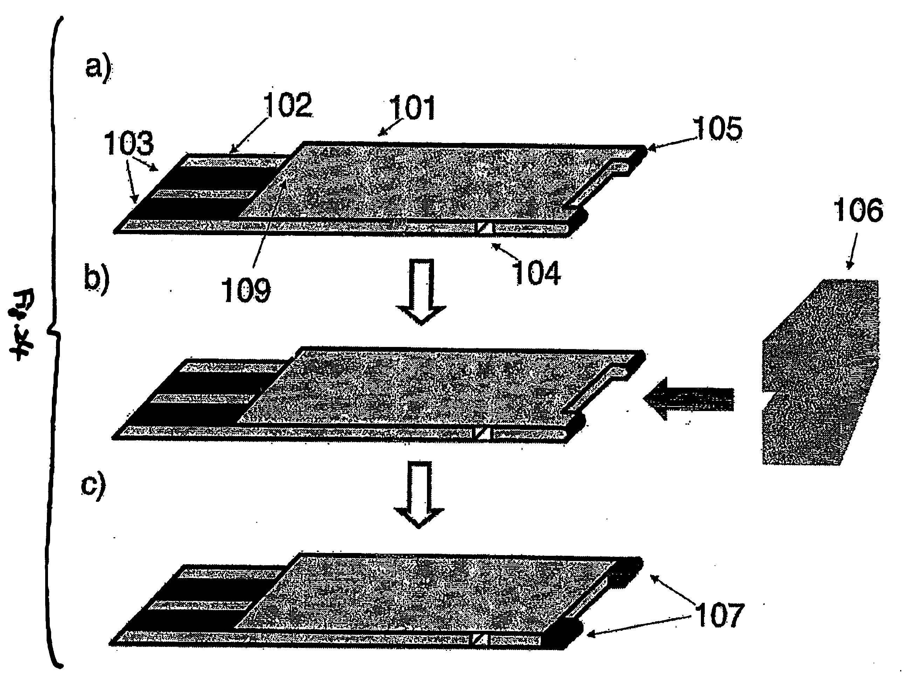

Fig. 24 is an example of a drawing showing a method of producing a biosensor by folding a sheet of an elastic plate member, in which the fixation of the biosensor produced is attained by thermal modification working so that the plate member is prevented from being warped and deformed.

Fig. 24(a) is an example of a biosensor 101 produced by folding and bending a plate member. The biosensor comprises an insulating elastic plate member 102, an electrode 103 on the plate member, a sample inlet port 104, and a folded part 105. Though not shown therein, there exist a spacer layer for forming a sample inlet port and a reaction detector part between the upper and lower plate member 102 of the biosensor. The spacer layer may be formed of an adhesive layer alone, or may be formed of a plate member and an adhesive layer formed on both the upper and lower layer thereof.

The folded part 105 is formed when the plate member is shaped into the sensor by folding and bending it, for example, along the perforations formed through the substrate.

Fig. 24 (b), (c) show an example of a thermally modified part (107) of a folded part 105. For this, the folded part 105 of the biosensor is inserted into a thermally-modifying device 106 (mold), whereby the folded part 105 or around it is heated and thermally modified.

The mold 106 does not always require a groove, but it may be a mold (heat source) having a flat surface. The edge of the folded part of the biosensor ("edge of the folded part" means a part except the area around the sample inlet port 104 and the reaction detector part, and this indicates the edge region where the folded part of the biosensor exists, including the folded part 105 or the folded part 105 and around it) may not be in direct contact with the mold, and the edge of the folded part may be modified by the heat from the mold.

In this, since enzyme may be deactivated by heat, it is desirable that the region to be heated is limited to the folded part 105 of the biosensor 101, or the folded part thereof and around it, or around the edge part of the cover on the opposite side of the folded part (cover edge "cover edge" is a part except the area around the sample inlet port 104 and the reaction detector part, indicating the region where the cover edge on the opposite side of the folded part exists). Accordingly, the sample inlet port and the reaction detector part may be so controlled that they are hardly influenced by the heating.

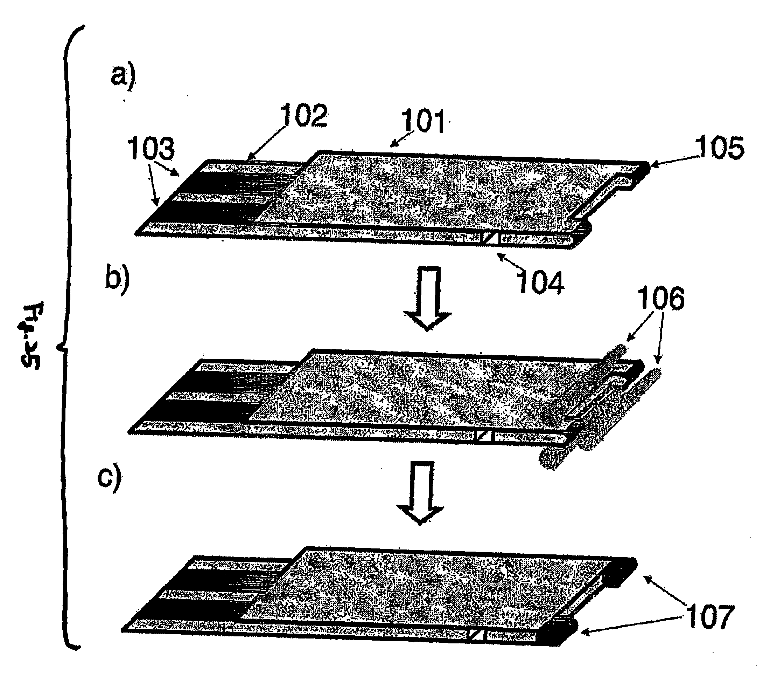

Fig. 25 shows an example of obtaining a biosensor having a thermally-modified part 107, in which the folded part 105 or the folded part 105 and around it is thermally-modified by three thermal-modification devices (heating coils) 106 provided at the edge of the folded part of the biosensor 101 and up and blow it, thereby to be the thermally-modified part 107. In this case, the corresponding part of the biosensor may be thermally-modified by contacting it with the heating coils, or may be thermally-modified not in direct contact with the heating coils but by the radiation heat from the heating coils.

Like in the above, it is desirable that the heating coils are disposed in the area where the enzyme inside the biosensor 101 is not influenced by the heat from them.

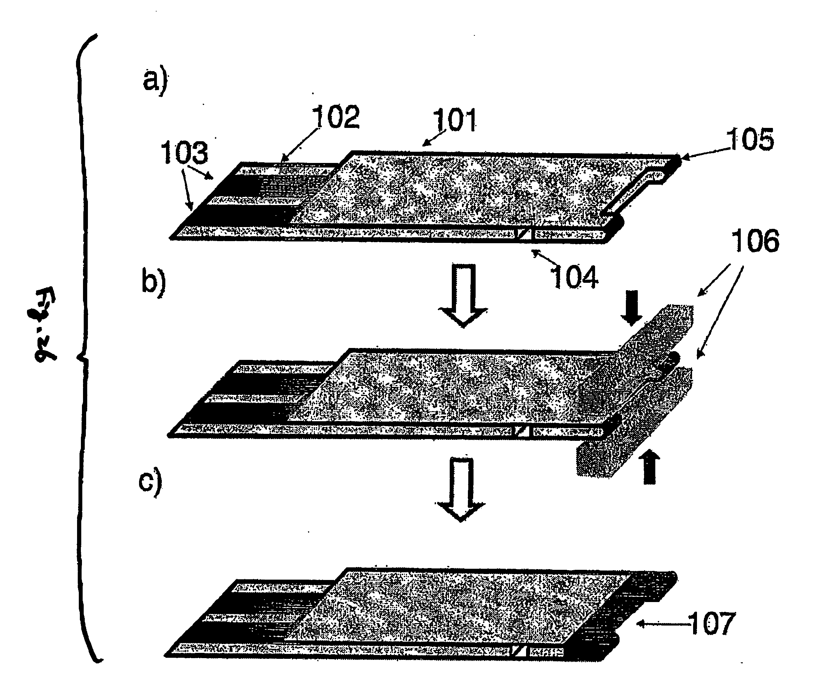

Fig. 26 shows an example of obtaining a biosensor having a modified part 107, in which a pair of upper and lower modifying units (molds) 106 for thermocompression bonding modification thermally press the edge of the folded part of a biosensor whereby the necessary parts of the plate member 102 and the spacer are cured and modified to give the modified part 107.

In Fig. 26, used are a pair of upper and lower molds 106. Apart from it, however, the upper or lower mold alone may be used for the thermal modification to thereby reduce the influence of warping and deformation.

Like in the above, the molds are preferably so disposed that the enzyme inside the biosensor 101 is not influenced by their heat.

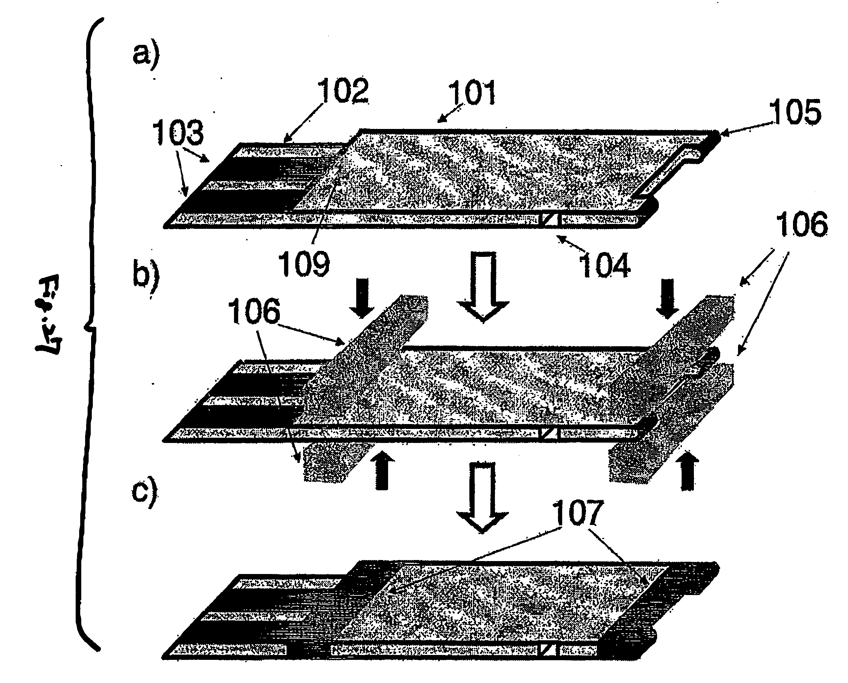

Fig. 27 shows, like Fig. 26, a case of curing and modifying the necessary parts of the plate member 102 and the spacer by thermocompression bonding modification of two parts, or that is, around the edge of the folded part 106 including the folded part of the biosensor 101 and around the cover edge 109, by two pairs of upper and lower molds 106 for thermocompression bonding modification.

In Fig. 27, used are pairs of upper and lower molds 106. Apart from it, however, the upper or lower mold alone may be used for the thermal modification to thereby reduce the influence of warping and deformation.

Like in the above, the molds are preferably so disposed that the enzyme inside the biosensor 101 is not influenced by their heat.

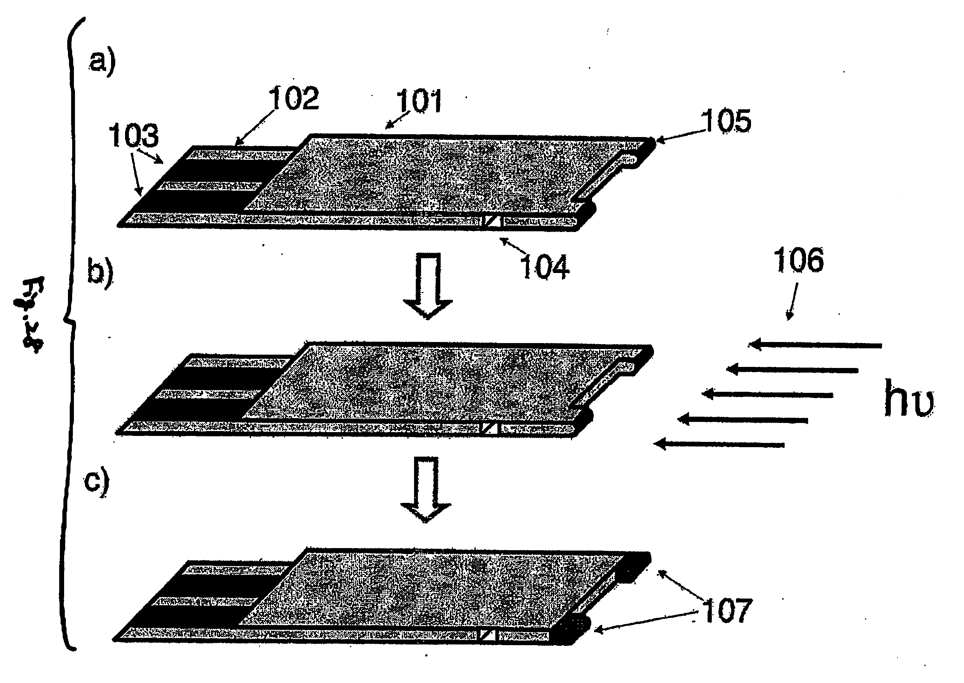

Fig. 28 shows an example of photocuring, in which a substrate 102 having a photocuring resin at its folded part 105, or the folded part 105 formed of a plate member 102 of a photocuring resin, or the folded part 105 and around it is exposed to light whereby the photocuring resin is photocured.

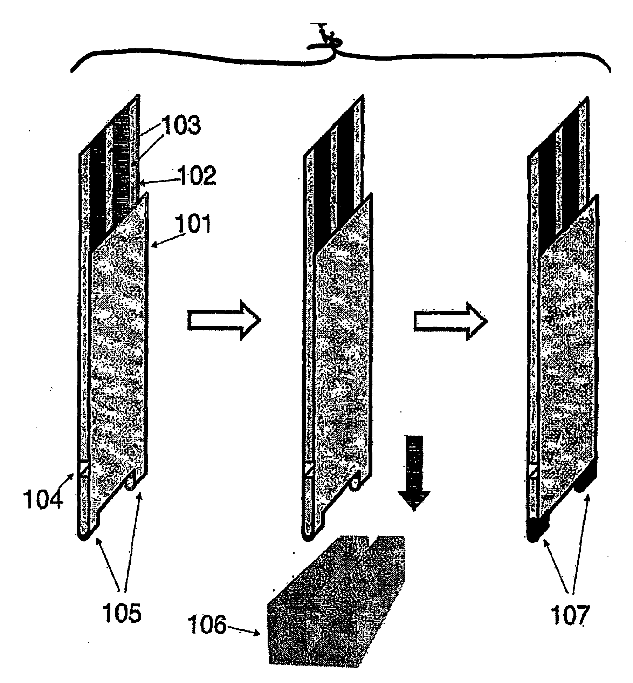

Fig. 29 shows an example where the folded part 105 or the folded part 105 and around it is dipped in a chemical reagent put in the groove of a modifying device 106 and is modified therein, extending from the folded part of the biosensor 101. The chemical reagent to be used herein is preferably an organic solvent that dissolves the substrate. The solvent penetrates into the folded part, thereby being able to remove or reduce the warping force (stress).

When the chemical reagent in Fig. 29 is a thermosetting resin or a photocuring resin, then the dipped part may be processed in a predetermined step of heating or irradiation with light and the resin may be thereby cured and its warping may be prevented.

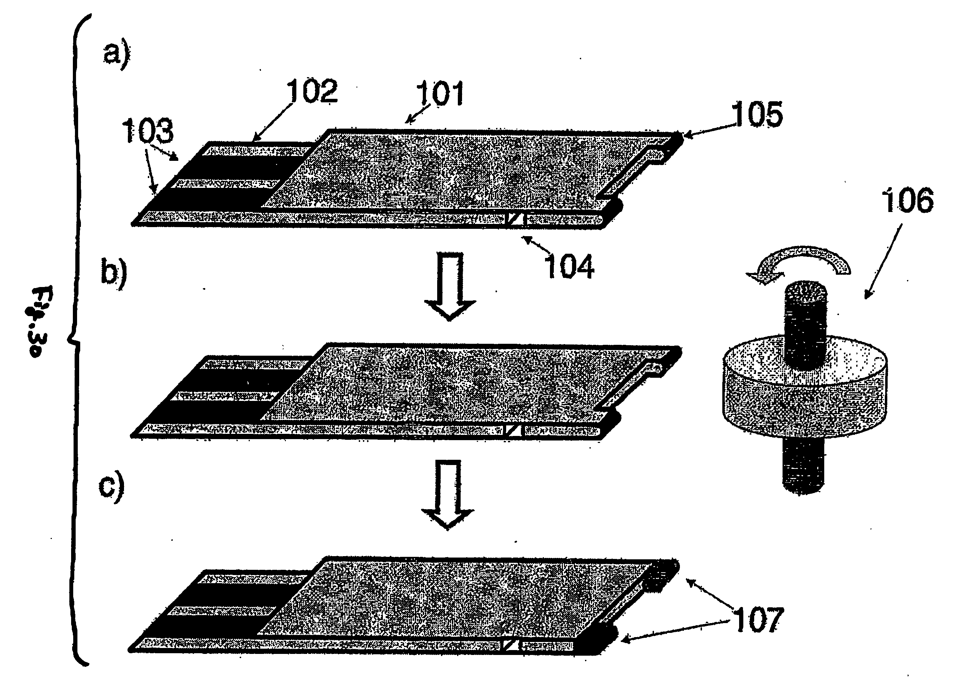

Fig. 30 shows an example of modifying the folded part 105 or the folded part 105 and around it by contacting it with the surface of a rotary roller damped with a chemical reagent.

When the chemical reagent in Fig. 30 is a thermosetting resin or a photocuring resin, then the part may be processed in a predetermined step of heating or irradiation with light and the resin may be thereby cured and its warping may be prevented. In this case, a rotary roller-type heater or a light source may be used in place of the above roller to attain the thermosetting or photocuring.

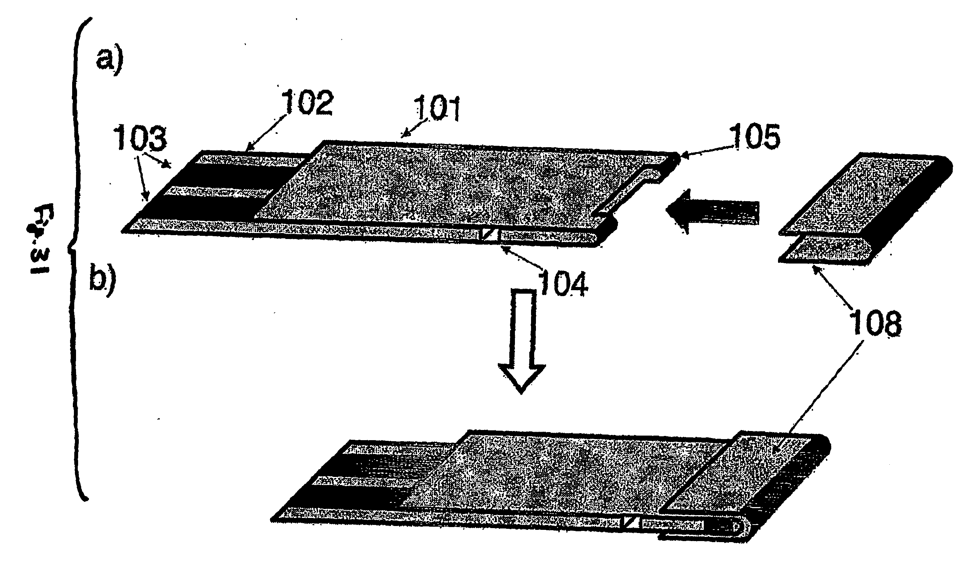

Fig. 31 to Fig. 36 show a method of preventing warping and deformation, in which a clip is used as a fixation tool and the folded part-having end of the biosensor is wholly or partly clipped to fix the substrate or the cover for warping prevention.

Fig. 31 is one example of a fixation method of using a fixing tool (clip) having a size capable of wholly clipping and fixing the edge of the folded part of a biosensor 101. The material of the clip to be used in this case may be such that its clipping strength could be enough to fix the folded part and to prevent it from warping, and that it does not give any excess damage such as depressions to the biosensor body, especially capable of preventing the deformation of the sample inlet port and the reaction detector part. For example, the material may be metals or plastics, and preferably plastics.

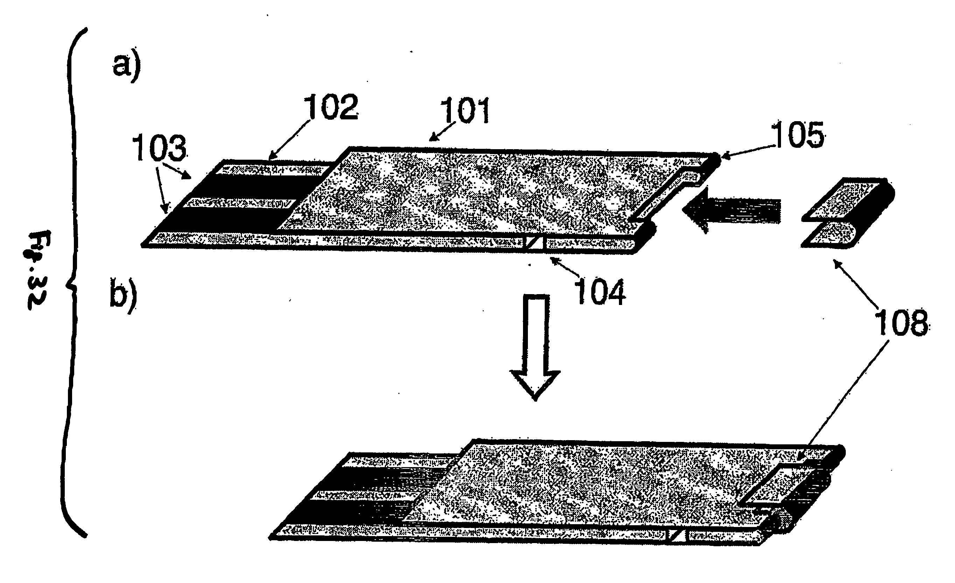

Fig. 32 is the same as Fig. 31 except the size of the clip. In this case, the fixing tool (clip) 108 is preferably fitted into the center of the edge of the folded part of the biosensor 101 in consideration of the right and left balance thereof. Further, a narrower fixing tool such as a smaller clip or hairpin may be used to fix at least one part of the edge of the folded part of the biosensor 101 to prevent the warping.

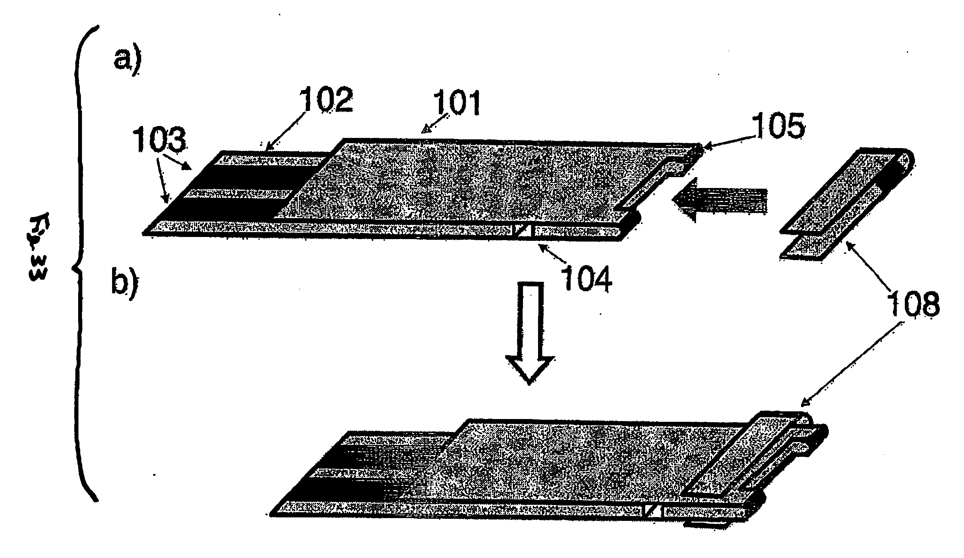

Fig. 33 is one example of a fixation method of using a fixing tool (clip) 108 having a size capable of entirely clipping the overall width of a biosensor from one side of the edge of the folded part of the biosensor 101.

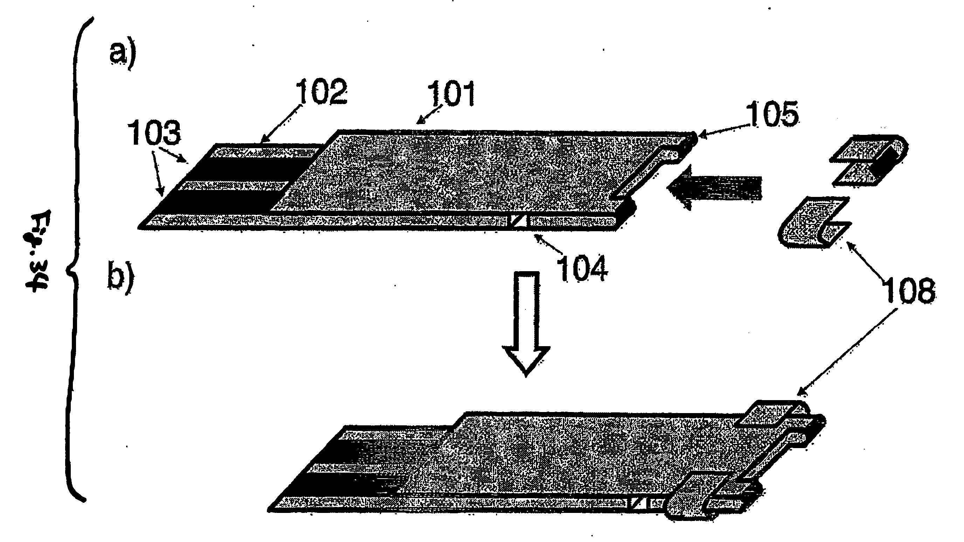

Fig. 34 is one example of a fixation method where the sides of the edge of the folded part of a biosensor 101 are fixed by clipping them on both sides thereof, using two fixation tools (clips) 108.

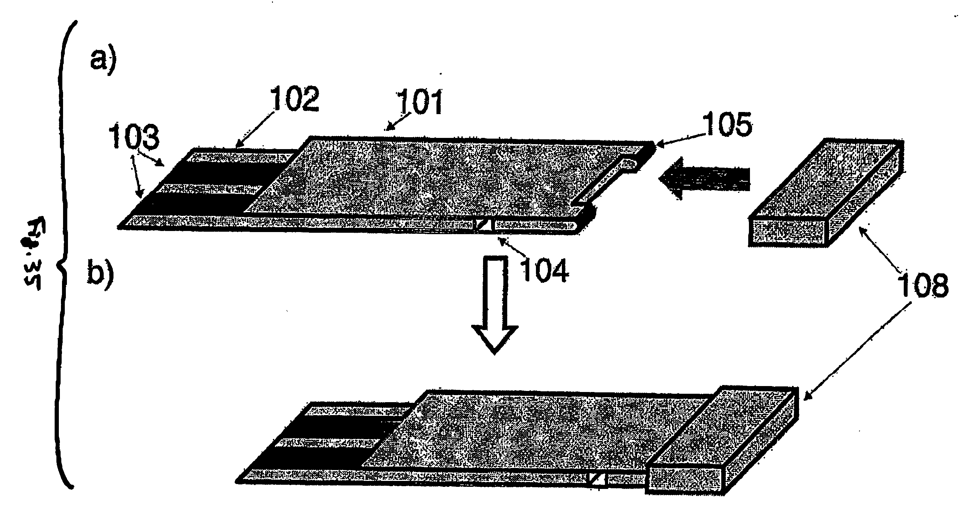

Fig. 35 is one example of a fixation method of entirely capping the edge of the folded part of a biosensor 101 with a fixation tool (cap) 108. The material of the cap to be used in this case is not specifically defined, and may be metals or plastics, but preferably plastics. When a thermoshrinking material is used as the cap, then the edge of the folded part of the biosensor may be uniformly fixed by a suitable force.

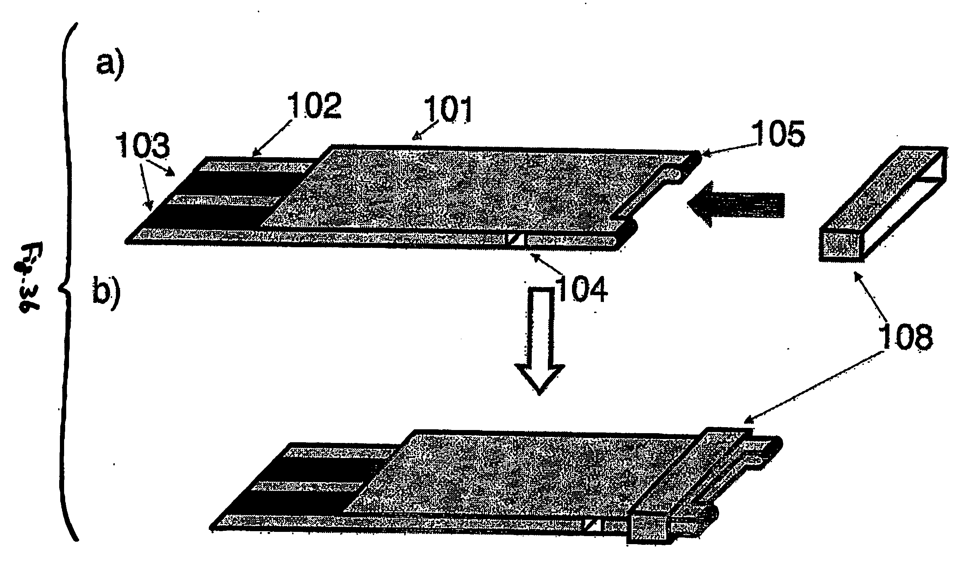

Fig. 36 is one example of a fixation method where the edge of the folded part of a biosensor 101 is fixed with a fixing tool (frame) 108. The material of the frame to be used in this case is not specifically defined, and may be metals or plastics, but preferably plastics.

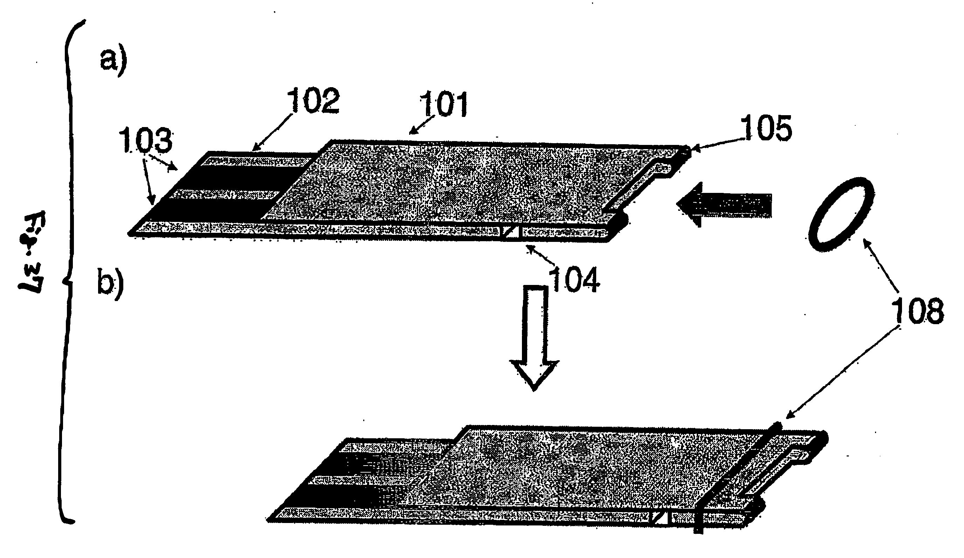

Fig. 37 is one example of a fixation method where the edge of the folded part of a biosensor 101 is fixed with a fixing tool (ring) 108. The material of the ring to be used in this case is not specifically defined, but is preferably plastics. Especially preferably, elastic rings of rubber or the like are used, or rings of a thermoshrinking agent may be fixed through thermoshrinking treatment for use in this case.

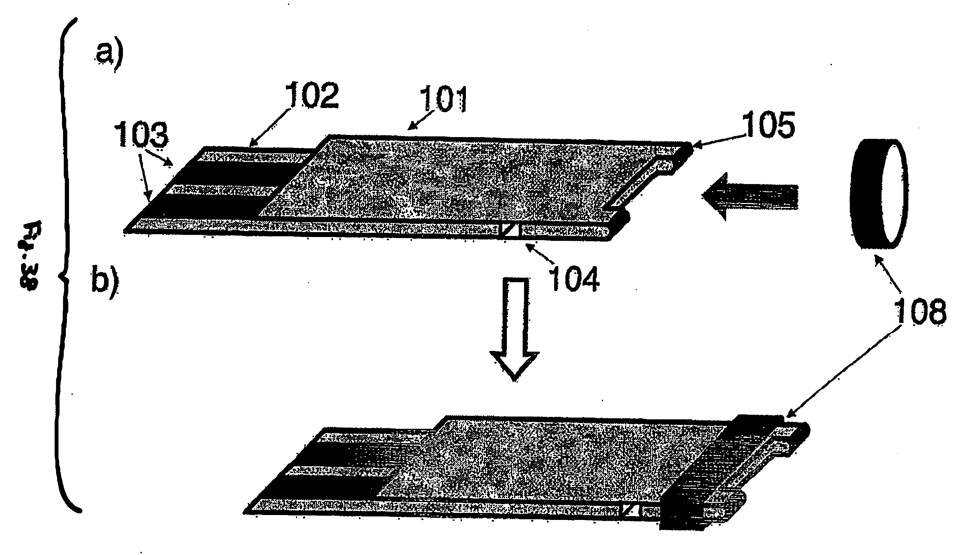

Fig. 38 is one example of a fixation method where the edge of the folded part of a biosensor 101 is fixed with a fixing tool (tubular ring) 108. The material of the ring to be used in this case is not specifically defined, but is preferably plastics. Especially preferably, elastic rings of rubber or the like are used, or rings of a thermoshrinking agent may be fixed through thermoshrinking treatment for use in this case.

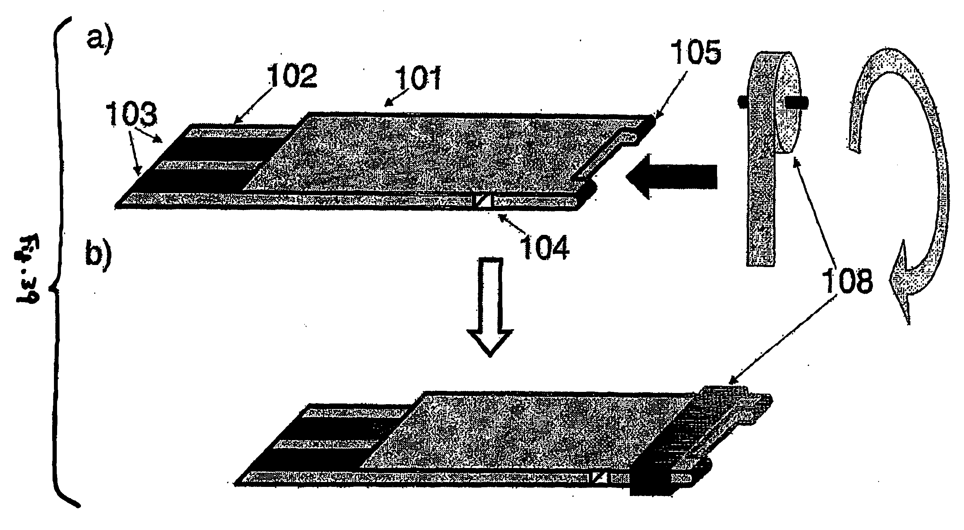

Fig. 39 is one example of a fixation method where the edge of the folded part of a biosensor 101 is fixed with a fixing tool (adhesive tape) 108. The material of the adhesive tape to be used in this case is not specifically defined, but is preferably plastics. Especially preferably, elastic rings of rubber or the like are used, or rings of a thermoshrinking agent may be fixed through thermoshrinking treatment for use in this case.

### EXAMPLES

The invention is described in detail with reference to the following Examples, to which, however, the invention should not be limited. In the Examples, a glucose biosensor is used as an example of an enzyme sensor.

### [Example 1]

Fig. 2(a) is a drawing showing a glucose sensor of an embodiment of the invention. As the reagent layer, used are glucose oxidase and potassium ferricyanide. The measurement principle of the glucose sensor shown in Fig. 2(a) is as follows:

In the present sensor, a sample is introduced into it through its sample inlet port by capillarity. Thus introduced, the glucose solution acts as follows: By the oxidation of glucose, ferricyanide ion is converted into ferrocyanide ion owing to the catalyst action of GOD in the reagent layer, as in the following formula 1:

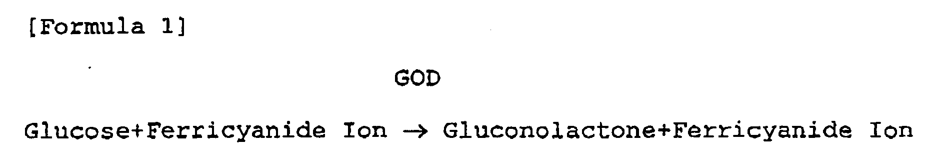

The produced ferrocyanide ion is oxidized according to the electrode reaction of the following formula 2, on a carbon electrode, and is thereby electrochemically detected.

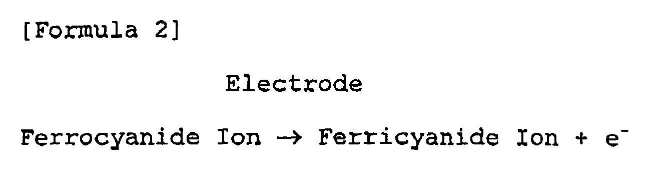

According to the detection method of using the glucose sensor of the invention, the produced ferrocyanide ion is oxidized by an anode electrode to give an anode current, and the ferrocyanide ion is again returned to ferricyanide ion. As in the above, by detecting the current value change of the concentration of the ferrocyanide ion produced by the enzyme reaction, it is possible to quantitatively determine the glucose.

Next described are a production method and a measurement method.

PET having a length of 65 mm, a width of 6 mm and a thickness of 188 µm is used as a sensor substrate. On the sensor substrate, formed were two carbon electrodes at an interval of 2.6 mm, each having a width of 1.3 mm, by the use of a screen-printing device. An adhesive was applied to it to form an adhesive layer on the substrate according to a screen-printing process. Perforations were formed at the part to be folded. The sample amount was 0.5 µl.

A reagent layer of enzyme and mediator was formed as follows: Glucose oxidase (GOD) and potassium ferricyanide (mediator) were dissolved in distilled water, and applied on the surface of the electrodes. 4 units of GOD and 0.1 mg of potassium ferricyanide were dissolved in 10 µl of distilled water. 3 µl of the GOD solution was applied onto the electrode surface and dried in vacuum to form an enzyme/mediator reagent layer on the two electrodes.

An example of measuring blood sugar (blood glucose) by the use of the glucose sensor is described. As sample solutions to be assayed for detection of blood sugar by the use of the present glucose sensor, used were whole blood samples specifically so prepared as to have a glucose concentration of 50, 100, 200, 300, 400 or 500 mg/dl and a hematocrit value of 40 %. The measurement was attained through potential step chronoamperometry. 0.5 µl of the blood sample was led into the sensor through the sample inlet port by capillarity, and after 5 seconds, a potential of 900 mV was applied to the two electrodes in the sensor. Further after 5 seconds, the current value running through the sensor was measured.

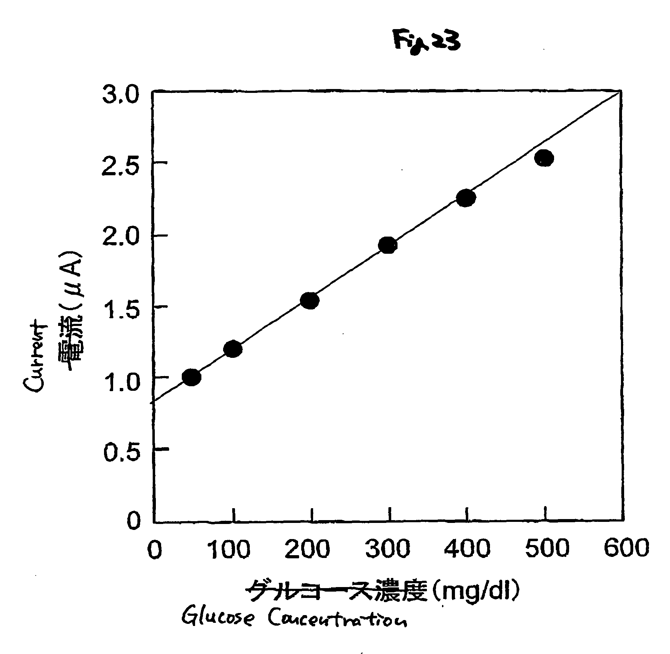

Fig. 23 shows the current value change shown by the sensor of the invention depending on the glucose concentration. With reference to Fig. 23, a current value change of from 1 to 2.5 µA was observed within a range of blood glucose of 50, 100, 200, 300, 400 and 500 mg/dl. When a whole blood sample of 100 mg/dl was assayed 10 times, then the reproducibility of the measured values was 4.1 % in terms of the fluctuation coefficient thereof.

### [Example 2]

In Example 1, a reagent layer of glucose oxidase and potassium ferricyanide was formed on the electrodes. In Example 2, it was formed not on the electrodes but on the cover part. This is described with reference to Fig. 2(a). The reagent layer was formed in a part of the cover part of the sample transfer path 8 between the adhesive layers 10 formed in the cover part. Example 2 is the same as Example 1 in point of the sensor substrate, the method of forming the enzyme/mediator reagent layer, and the measurement condition, except that the reagent layer was formed in the cover layer in the former. As a result, a current value change of from 1 to 3.0 µA was observed within a range of blood glucose of 50, 100, 200, 300, 400 and 500 mg/dl, almost similarly to that in Fig. 23. When a whole blood sample of 100 mg/dl was assayed 10 times, then the reproducibility of the measured values was 5.9 % in terms of the fluctuation coefficient thereof.

## Claims

1. A biosensor produced by folding, bending, or folding and bending a sheet of an electrical insulating flat substrate.

2. A biosensor, comprising:
an electrode disposed in a space sandwiched between a substrate and a cover;
a sample inlet port through which a sample is injected into the space; and
a sample transfer path extending from the sample inlet port to pass through the electrode,
wherein the substrate and the cover are formed by folding and bending a sheet of an electrical insulating plate member,
the electrode is formed on a surface of the plate member, and the plate member is folded and bent with its surface inside so that the electrode is disposed in the space sandwiched between the substrate and the cover, and
the sample transfer path is disposed on the surface of the plate member and is defined by an adhesive layer for face-to-face disposing the substrate and the cover.

3. The biosensor according to claim 2,
wherein perforations are formed in a foldable and bendable part of the plate member to be folded and bent.

4. A biosensor, comprising:
a sensor body formed by bending a sheet of an electrical insulating plate member in a cylindrical structure;
an electrode formed on an inner wall of the sensor body;
a sample inlet port formed on one end or a side face of the cylinder; and
a sample transfer path extending from the sample inlet port to pass through the electrode.

5. The biosensor according to claim 4,
wherein the cylindrical structure is columnar, oval-columnar, semicircle-columnar, fan-columnar, crescent-columnar, triangle-columnar, square-columnar or polygon-columnar.

6. The biosensor according to any of claims 2 to 5,
wherein the electrode is defined by a resist layer.

7. The biosensor according to any of claims 2 to 6,
wherein a reagent layer is provided on the electrode through which the sample transfer path passes.

8. The biosensor according to any of claims 2 to 6,
wherein a reagent layer is provided on a cover through which the sample transfer path passes.

9. The biosensor according to any of claims 2 to 8,
wherein the sample inlet port is formed on one end or in an intermediate point of the sample transfer path.

10. The biosensor according to any of claims 2 to 9,
wherein a surfactant and/or a lipid is applied around the sample inlet port, or to or around a surface of the sample transfer path and the reagent layer.

11. The biosensor according to claim 10,
wherein the lipid is lecithin.

12. The biosensor according to any of claims 2 to 11,
wherein a tip portion of the sample inlet port has a curved part.

13. The biosensor according to any of claims 2 to 12,
wherein the plate member is any of plastics, biodegradable materials, or paper.

14. The biosensor according to claim 13,
wherein the plastic is polyethylene terephthalate.

15. The biosensor according to any of claims 2 to 14,
wherein the electrode is formed from any of carbon, silver, silver/silver chloride, platinum, gold, nickel, copper, palladium, titanium, iridium, lead, tin oxide, or platinum black.

16. The biosensor according to claim 15,
wherein the electrode is formed from nickel.

17. The biosensor according to claim 15,
wherein the carbon is selected from any of carbon nanotubes, carbon microcoils, carbon nanohorns, fullerenes, dendrimers, or their derivatives.

18. The biosensor according to any of claims 2 to 17,
wherein the electrode is formed on the plate member by any of a screen-printing process, a vapor deposition process, a sputtering process, a foil-sticking process, or a plating process.

19. The biosensor according to any of claims 2 to 18,
wherein the adhesive layer is formed by a screen-printing process.

20. The biosensor according to any of claims 2 to 17,
wherein the reagent is included in the adhesive layer.

21. The biosensor according to claim 6,
wherein the resist layer is formed by a screen-printing process.

22. The biosensor according to claim 7,
wherein the reagent layer is formed after purification.

23. The biosensor according to any of claims 7 to 22,
wherein the reagent layer is formed by a screen-printing process or a dispenser process.

24. The biosensor according to any of claims 7 to 23,
wherein the reagent layer is fixed on a surface of the electrode, a surface of the plate member, or the cover by an adsorption process in which the reagent layer is dried, or a covalent bond process.

25. The biosensor according to any of claims 7 to 24,
wherein two or more different reagent layers are provided.

26. The biosensor according to claim 25,
wherein a convex partition portion is disposed between the different reagent layers.

27. The biosensor according to claim 26,
wherein the convex partition portion is formed by a screen-printing process.

28. The biosensor according to claim 27,
wherein the convex partition portion is formed from any of carbon, resist, or water-absorbent material.

29. The biosensor according to any of claims 7 to 28,
wherein the reagent layer includes any of enzyme, antibody, nucleic acid, primer, peptide nucleic acid, nucleic acid probe, microorganism, organelle, receptor, cell tissue, molecule identification element such as crown ether, mediator, intercalator, coenzyme, labeled antibody substance, substrate, inorganic salt, surfactant, lipid, or their combinations.

30. The biosensor according to claim 29,
wherein the enzyme is any of an oxidase or dehydrogenase enzyme such as glucose oxidase, fructosylamine oxidase, lactate oxidase, urate oxidase, cholesterol oxidase, alcohol oxidase, glutamate oxidase, pyruvate oxidase, glucose dehydrogenase, lactate dehydrogenase, alcohol dehydrogenase, as well as cholesterol esterase, protease, DNA polymerase, or their combinations.

31. The biosensor according to any of claims 7 to 30,
wherein the reagent layer includes a combination of enzyme and mediator.

32. The biosensor according to claim 31,
wherein the mediator is selected from potassium ferricyanide, ferrocene and benzoquinone.

33. The biosensor according tc any of claims 7 to 32,
wherein the reagent layer includes a combination of an inorganic salt such as sodium chloride or potassium chloride, and quinhydrone.

34. The biosensor according to any of claims 7 to 33,
wherein the reagent layer includes a combination of primer, DNA polymerase, and deoxyribonucleotide triphosphate.

35. The biosensor according to any of claims 7 to 34,
wherein the reagent layer includes a combination of an inorganic salt such as sodium chloride or potassium chloride, and quinhydrone, primer, DNA polymerase and deoxyribonucleotide triphosphate.

36. The biosensor according to claim 7,
wherein an nucleic acid probe is immobilized as the reagent layer.

37. The biosensor according to claim 36,
wherein the electrode forms an array.

38. A biosensor device, comprising:
a biosensor of any of claims 1 to 37,
a measuring unit which measures an electric value at an electrode of the biosensor,
a display unit which displays a value measured by the measuring unit,
a memory unit which stores the measured value.

39. The biosensor device according to claim 38,
wherein any of potential step chronoamperometry, coulometry, or cyclic voltammetry is used as a measuring method by the measuring unit.

40. The biosensor device according to claim 38 or 39,
wherein Bluetooth is further provided as a wireless unit.

41. A method of storing a biosensor of any of claims 1 to 37 along with a desiccant.

42. A method of producing a biosensor which comprises an electrode, a sample inlet port through which a sample is injected into a space, and a sample transfer path extending from the sample inlet port to pass through the electrode, which are disposed in the space sandwiched between a substrate and a cover, and in which the sample transfer path is defined by an adhesive layer for face-to-face disposing the substrate and the cover,
the method comprises a folding and bending step of a plate member as follows:
a step of forming a substrate and a cover from a sheet of an electrical insulating plate member by folding and bending the plate member such that the electrode formed on a surface of the plate member faces inside, to thereby dispose the electrode in the space sandwiched between the substrate and the cover.

43. The method of producing the biosensor according to claim 42, which includes:
the folding and bending step; and
a step of cutting a folded portion which is a folded and bent part of the plate member.

44. The method of producing the biosensor according to claim 43,
wherein the folded portion is cut along perforations.

45. The method of producing the biosensor according to claim 42, which includes:
the folding and bending step of the plate member; and
a step of fixing the substrate and the cover by compression or modification working of the substrate or the cover, or application of a curing agent or a thermal-shrinking agent to the folded part, or equipping a fixing tool.

46. The method according to claim 45,
wherein the compression is a method of fixing at least a part of the biosensor under pressure.

47. The method according to claim 45,
wherein the modification working is a method of heating or thermally fixing under pressure the folded portion of the biosensor, or the folded portion and a surrounding portion thereof, or any other part of the biosensor.

48. The method according to claim 45,
wherein the adhesive layer of the biosensor includes a thermosetting resin, and
the modification working is a method of heating or thermally fixing under pressure the folded portion of the biosensor, or the folded portion and a surrounding portion thereof, or any other part of the biosensor, to cure all or a part of the adhesive layer.

49. The method according to claim 45,
wherein the plate member of the biosensor is formed from a light transparent material,
the adhesive layer includes a photocurable resin, and
the modification working is a method of irradiating the biosensor with light to cure the adhesive layer.

50. The method according to claim 45, wherein the plate member of the biosensor includes a thermosetting resin, and
the modification working is a method of heating all or a part of the plate member to cure all or a part of the plate member.

51. The method according to claim 45,
wherein the plate member of the biosensor includes a photocurable resin, and
the modification working is a method of irradiating the plate member with light to cure the plate member.

52. The method according to claim 45,
wherein the modification working is a method of applying a solvent to a surface of the folded portion of the biosensor, or to the surface of the folded portion and a surrounding portion thereof to infiltrate the solvent into the folded portion.

53. The method according to claim 45,
wherein the application of the curing agent is a method of applying a thermosetting resin to the folded portion of the biosensor, or to the folded portion and a surrounding portion thereof and further heating the thermosetting resin, to cure the thermosetting resin.

54. The method according to claim 45,
wherein the application of the curing agent is a method of applying a photocurable resin to the folded portion of the biosensor, or to the folded portion and a surrounding portion thereof and further irradiating the photocurable resin with light, to cure the photocurable resin.

55. The method according to claim 45,
wherein the application of the thermal-shrinking agent is a method of applying a thermal-shrinking agent to the folded portion of the biosensor, or to the folded portion and a surrounding portion thereof and further heating the thermal-shrinking agent, to semi-cure the thermal-shrinking agent.

56. The method according to claim 45,
wherein the equipping of the fixing tool is by pinching, encapsulating, capping, clamping with an elastic member, working with a thermal-shrinking agent, or fitting of an adhesive tape.

57. The biosensor according to claim 2,
wherein a folded portion of the biosensor is cut by the method of claim 43 or 44.

58. The biosensor according to claim 2,
wherein the biosensor is processed to be fixed by the method of any of claims 45 to 55.

59. The biosensor according to claim 2,
wherein the biosensor has a fixing tool which prevents a warp of the substrate and the cover.
